# EUROPEAN PATENT APPLICATION

(11) **EP 4 247 070 A1**
(43) Date of publication of application: **20.09.2023**
(21) Application number: 21908621.2
(22) Date of filing: 12.08.2021
(51) Int. Cl.: H04W 56/00

(54) **WIRELESS NETWORK DELAY PROCESSING METHOD AND SYSTEM AND ACCESS SERVER**

(30) Priority: 21.12.2020 CN 202011521113
(71) Applicant: Huawei Technologies Co., Ltd., Shenzhen, Guangdong 518129 (CN)
(72) Inventor: PENG, Yue, Shenzhen, Guangdong 518129 (CN); YANG, Ming, Shenzhen, Guangdong 518129 (CN); WANG, Zhen, Shenzhen, Guangdong 518129 (CN)
(74) Representative: Pfenning, Meinig & Partner mbB
(86) International application number: PCT/CN2021/112243
(87) International publication number: WO 2022/134616

(57) **Abstract**

This application discloses a wireless network delay processing method and system, and an access server, and pertains to the field of network technologies. According to the method provided in this application, a network local delay is obtained via an interaction packet between a modem and an access server, a user local delay is obtained in a process of establishing a session between a terminal device and a service server, and a user Internet access delay is further obtained based on the network local delay and the user local delay. In embodiments of this application, a wireless network delay is detected by using an original interaction packet and a session process in a network, simplifying implementation. In addition, the user local delay and the network local delay that are used to calculate the user Internet access delay each represent a packet transmission delay between network elements in a real network environment, and therefore accuracy of detecting quality of a home wireless network is high in embodiments of this application.

## Description

This application claims priority to Chinese Patent Application No. 202011521113.8, filed with the China National Intellectual Property Administration on December 21, 2020 and entitled "WIRELESS NETWORK DELAY PROCESSING METHOD AND SYSTEM, AND ACCESS SERVER", which is incorporated herein by reference in its entirety.

### TECHNICAL FIELD

This application relates to the field of computer networks, and in particular, to a wireless network delay processing method and system, and an access server.

### BACKGROUND

As home broadband is increasingly popular, a user usually accesses the Internet at home using a terminal device such as a mobile phone or a tablet computer in a wireless fidelity (wireless fidelity, Wi-Fi) access manner. Wi-Fi access may result in poor network use experience due to factors such as signal coverage and signal interference. Therefore, a signal in a wireless network needs to be detected, to improve quality of the wireless network.

Currently, carriers have built-in probes in an Internet protocol television (Internet protocol television, IPTV) set-top box. The set-top box is connected to an optical modem (a modem for photoelectric signal conversion, which is also referred to as an optical modem) through a wired network (for example, a network cable). The built-in probes in the set-top box collect indicator data such as network traffic, watching time, and video stalling time when users watch IPTV, and periodically report the indicator data to a remote management server. The management server analyzes the indicator data reported by the probes, allowing the carriers to observe signal quality of users in the use of IPTV

In the foregoing delay detection solution, at least the following problems exist. An IPTV service provisioning rate, generally below 10%, is low, and an online rate is low as users usually go online only in prime time. In addition, as the IPTV set-top box is basically directly connected through a network cable, no Wi-Fi air interface delay exists. To be specific, the set-top box detects a signal in a wired network from the set-top box to the optical modem, but a more frequently used wireless network signal for accessing the Internet through Wi-Fi is different from the signal in the wired network. Therefore, the foregoing delay detection solution is not applicable to detect a wireless network delay, and is merely applicable to detect a delay between the set-top box and the optical modem but cannot be used to obtain an Internet access delay of a terminal device.

### SUMMARY

Embodiments of this application provide a wireless network delay processing method and system, and an access server, to accurately obtain a packet transmission delay between a terminal device and a modem.

To resolve the foregoing technical problem, embodiments of this application provide the following technical solutions.

According to a first aspect, an embodiment of this application provides a wireless network delay processing method, including:
after access authentication on a modem is completed, obtaining a network local delay via an interaction packet between the modem and an access server, where the modem is configured to convert a signal from a wireless network into a form suitable for wired network transmission, and the network local delay is a packet transmission delay between the modem and the access server;
obtaining a user local delay in a process of establishing a session between a terminal device in the wireless network and a service server in the Internet, where the session is established between the terminal device and the service server via the modem and the access server, and the user local delay is a packet transmission delay between the terminal device and the access server; and
determining a user Internet access delay based on the network local delay and the user local delay, where the user Internet access delay is a packet transmission delay between the terminal device and the modem.

According to the method provided in this embodiment of this application, the user Internet access delay is obtained based on the network local delay and the user local delay. In this embodiment of this application, a wireless network delay is detected by using an original interaction packet and a session process in a network without deploying a probe, simplifying implementation. In addition, in this embodiment of this application, the user local delay and the network local delay that are used to calculate the user Internet access delay each represent a packet transmission delay between network elements in a real network environment, and therefore accuracy of detecting quality of a home wireless network is high.

Optionally, the obtaining a network local delay via an interaction packet between the modem and an access server includes the following step:
An analysis server receives the network local delay from the access server, where the network local delay is determined by the access server based on the interaction packet, and there is a communication connection between the analysis server and the access server.

In this optional manner, the analysis server can obtain the network local delay to determine the user Internet access delay.

Optionally, that an analysis server receives the network local delay from the access server includes the following step:
The analysis server receives link maintenance information from the access server, where the link maintenance information includes a device address of the modem and the network local delay.

In this optional manner, the link maintenance information is used to maintain a link between the access server and the analysis server, and the link maintenance information can include the network local delay, so that the analysis server can obtain the network local delay, and therefore the network local delay can be used to determine the user Internet access delay.

Optionally, the obtaining a network local delay via an interaction packet between the modem and an access server includes the following steps:
The access server sends a request message to the modem, and records a first moment at which the request message is sent.

The access server receives a response message sent by the modem in response to the request message, and records a second moment at which the response message is received.

The access server determines the network local delay based on the first moment and the second moment.

In this optional manner, the access server exchanges the request message and the response message with the modem, so that the access server can accurately obtain the network local delay, and therefore the network local delay can be used to determine the user Internet access delay.

Optionally, the obtaining a user local delay in a process of establishing a session between a terminal device in the wireless network and a service server in the Internet includes the following step:
The analysis server receives the user local delay from the access server, where the user local delay is determined by the access server based on a moment at which a handshake packet between the terminal device and the service server is forwarded by the access server, and the handshake packet is used to establish the session.

In this optional manner, the analysis server can obtain the user local delay, so that the user local delay can be used to determine the user Internet access delay.

Optionally, that the analysis server receives the user local delay from the access server includes the following step:
The analysis server receives Internet access flow information from the access server, where the Internet access flow information includes the device address of the modem and the user local delay.

In this optional manner, the access server generates the Internet access flow information, where the Internet access flow information includes an Internet access account of the modem, the device address of the modem, and the user local delay. The device address of the modem corresponds to the Internet access flow information, so that the analysis server determines a modem from which the received Internet access flow information comes.

Optionally, the method further includes the following steps:
A memory server receives an accounting message sent by the access server, where the accounting message includes an Internet access address of the terminal device and the device address of the modem, and there is a communication connection between the memory server and the access server.

The memory server stores a correspondence between the Internet access address of the terminal device and the device address of the modem in the accounting message.

The memory server receives a traffic query request sent by the access server, where the traffic query request includes an Internet access address corresponding to Internet access traffic.

The memory server queries the correspondence based on the traffic query request, and sends a traffic query result to the access server, where the traffic query result includes the device address that is of the modem and that corresponds to the Internet access address corresponding to the Internet access traffic.

In this optional manner, the memory server stores a correspondence between the Internet access account of the modem, the Internet access address of the terminal device, and the device address of the modem. Therefore, the memory server queries the foregoing correspondence, to find the device address that is of the modem and that corresponds to the Internet access address corresponding to the Internet access traffic, and then sends the traffic query result to the access server.

Optionally, the accounting message includes an Internet access account of the modem.

In this case, the traffic query result includes the Internet access account of the modem.

In this optional manner, if the user Internet access delay in a unit of family needs to be identified, the Internet access account of the modem needs to be included in the traffic query result, so that the access server determines, based on the Internet access account of the modem in the traffic query result, the family corresponding to the user Internet access delay.

Optionally, the obtaining a user local delay in a process of establishing a session between a terminal device in the wireless network and a service server in the Internet includes the following steps:
The access server records a third moment at which a first acknowledgment packet is forwarded by the access server, where the first acknowledgment packet is an acknowledgment packet sent by the service server after the service server receives a synchronization packet sent by the terminal device.

The access server records a fourth moment at which a second acknowledgment packet is forwarded by the access server, where the second acknowledgment packet is an acknowledgment packet sent by the terminal device to the service server after the terminal device receives the first acknowledgment packet.

The access server determines the user local delay based on the third moment and the fourth moment.

In this optional manner, the access server can forward the acknowledgment packet between the terminal device and the service server, to obtain the user local delay based on a transmission time of the acknowledgment packet between the terminal device and the service server, so that the user local delay can be used to determine the user Internet access delay.

Optionally, the determining a user Internet access delay based on the network local delay and the user local delay includes:
determining that the user Internet access delay is a difference obtained by subtracting the network local delay from the user local delay.

In this optional manner, the difference obtained by subtracting the network local delay from the user local delay is calculated. The difference is directly used as the user Internet access delay, that is, the user local delay is obtained by subtracting the network local delay from the user local delay. For another example, a result obtained by subtracting the network local delay from the user local delay is corrected to obtain the user local delay. For another example, a correction factor is determined based on quality of a link between the terminal device and the modem, and the result obtained by subtracting the network local delay from the user local delay is corrected based on the correction factor, to obtain the user Internet access delay.

Optionally, the modem is an optical modem, and the modem is configured to convert a signal from the wireless network in which the terminal device is located into a form suitable for optical fiber line transmission.

In this optional manner, the optical modem is configured to convert the signal from the wireless network in which the terminal device is located into the form suitable for optical fiber line transmission. Therefore, this embodiment of this application can be applied to an optical network transmission scenario.

According to a second aspect, an embodiment of this application further provides a wireless network delay processing method. The method includes the following steps:
After access authentication on a modem is completed, an access server obtains a network local delay via an interaction packet between the modem and the access server, where the modem is configured to convert a signal from a wireless network into a form suitable for wired network transmission, and the network local delay is a packet transmission delay between the modem and the access server.

The access server sends the network local delay to an analysis server.

The access server obtains a user local delay in a process of establishing a session between a terminal device in the wireless network and a service server in the Internet, where the user local delay is a packet transmission delay between the terminal device and the access server.

The access server sends the user local delay to the analysis server, so that the analysis server determines a user Internet access delay based on the network local delay and the user local delay, where the user Internet access delay is a packet transmission delay between the terminal device and the modem.

According to the method provided in this embodiment of this application, the user Internet access delay is obtained based on the network local delay and the user local delay. In this embodiment of this application, a wireless network delay is detected by using an original interaction packet and a session process in a network without deploying a probe. Therefore, implementation difficulty is low. In addition, in this embodiment of this application, the user local delay and the network local delay that are used to calculate the user Internet access delay each represent a packet transmission delay between network elements in a real network environment. Therefore, in this embodiment of this application, accuracy of detecting quality of a home wireless network is high.

Optionally, that an access server obtains a network local delay via an interaction packet between the modem and the access server includes the following steps:
The access server sends a request message to the modem, and records a first moment at which the request message is sent.

The access server receives a response message sent by the modem in response to the request message, and records a second moment at which the response message is received.

The access server determines the network local delay based on the first moment and the second moment.

Optionally, that the access server sends the network local delay to an analysis server includes the following step:
The access server sends link maintenance information to the analysis server, where the link maintenance information includes a device address of the modem and the network local delay.

Optionally, that the access server obtains a user local delay in a process of establishing a session between a terminal device in the wireless network and a service server in the Internet includes the following steps:
The access server records a third moment at which a first acknowledgment packet is forwarded by the access server, where the first acknowledgment packet is an acknowledgment packet sent by the service server after the service server receives a synchronization packet sent by the terminal device.

The access server records a fourth moment at which a second acknowledgment packet is forwarded by the access server, where the second acknowledgment packet is an acknowledgment packet sent by the terminal device to the service server after the terminal device receives the first acknowledgment packet.

The access server determines the user local delay based on the third moment and the fourth moment.

Optionally, the method further includes the following steps:
The access server obtains the device address that is of the modem and that is associated with the user local delay, and generates Internet access flow information based on the obtained device address that is of the modem and that is associated with the user local delay, where the Internet access flow information includes the device address of the modem and the user local delay.

That the access server sends the user local delay to the analysis server includes: The access server sends the Internet access flow information to the analysis server.

Optionally, the method further includes the following step:
The access server sends an accounting message to a memory server, where the accounting message includes an Internet access address of the terminal device and the device address of the modem.

That the access server obtains the device address that is of the modem and that is associated with the user local delay includes the following steps:
The access server sends a traffic query request to the memory server, where the traffic query request includes an Internet access address corresponding to Internet access traffic.

The access server receives a traffic query result sent by the memory server, where the traffic query result includes the device address that is of the modem and that corresponds to the Internet access address corresponding to the Internet access traffic.

Optionally, the method further includes the following steps:
The access server receives an access authentication request sent by the modem, where the access authentication request includes an Internet access account and a password of the modem.

The access server obtains an access authentication result based on the access authentication request.

The access server sends the device address of the modem to the modem when the access authentication result is that authentication on the modem succeeds.

According to a third aspect, an embodiment of this application further provides a wireless network delay processing system. The system includes:
a network local delay obtaining module, configured to: after access authentication on a modem is completed, obtain a network local delay via an interaction packet between the modem and an access server, where the modem is configured to convert a signal from a wireless network into a form suitable for wired network transmission, and the network local delay is a packet transmission delay between the modem and the access server;
a user local delay obtaining module, configured to obtain a user local delay in a process of establishing a session between a terminal device in the wireless network and a service server in the Internet, where the session is established between the terminal device and the service server via the modem and the access server, and the user local delay is a packet transmission delay between the terminal device and the access server; and
a user Internet access delay obtaining module, configured to determine a user Internet access delay based on the network local delay and the user local delay, where the user Internet access delay is a packet transmission delay between the terminal device and the modem.

Optionally, the system includes an analysis server and the access server, the access server includes a first submodule and a sending submodule, and the analysis server includes a receiving submodule.

The network local delay obtaining module is implemented through collaboration among the first submodule and the sending submodule in the access server and the receiving submodule in the analysis server.

The first submodule is configured to: send a request message to the modem, and record a first moment at which the request message is sent; receive a response message sent by the modem in response to the request message, and record a second moment at which the response message is received; and determine the network local delay based on the first moment and the second moment.

The sending submodule is configured to send the network local delay to the analysis server.

The receiving submodule is configured to receive the network local delay from the access server.

Optionally, the network local delay is carried in link maintenance information sent by the sending submodule, and the link maintenance information includes a device address of the modem and the network local delay.

Optionally, the system includes an analysis server and the access server, the access server includes a second submodule and a sending submodule, and the analysis server includes a receiving submodule.

The user local delay obtaining module is implemented through collaboration among the second submodule and the sending submodule in the access server and the receiving submodule in the analysis server.

The second submodule is configured to: record a third moment at which a first acknowledgment packet is forwarded by the access server, where the first acknowledgment packet is an acknowledgment packet sent by the service server after the service server receives a synchronization packet sent by the terminal device; record a fourth moment at which a second acknowledgment packet is forwarded by the access server, where the second acknowledgment packet is an acknowledgment packet sent by the terminal device to the service server after the terminal device receives the first acknowledgment packet; and determine the user local delay based on the third moment and the fourth moment.

The sending submodule is configured to send the user local delay to the analysis server.

Optionally, the user local delay is carried in Internet access flow information sent by the sending submodule, and the Internet access flow information includes a device address of the modem and the user local delay.

The receiving submodule is configured to receive the user local delay from the access server.

Optionally, the wireless network delay processing system further includes a memory server.

The memory server includes a receiving submodule, a storage submodule, and a sending submodule.

The receiving submodule is configured to receive an accounting message sent by the access server, where the accounting message includes an Internet access address of the terminal device and a device address of the modem, and there is a communication connection between the memory server and the access server.

The storage submodule is configured to store a correspondence between the Internet access address of the terminal device and the device address of the modem in the accounting message.

The receiving submodule is configured to receive a traffic query request sent by the access server, where the traffic query request includes an Internet access address corresponding to Internet access traffic.

The sending submodule is configured to: query the correspondence based on the traffic query request, and send a traffic query result to the access server, where the traffic query result includes the device address that is of the modem and that corresponds to the Internet access address corresponding to the Internet access traffic.

Optionally, the user Internet access delay obtaining module is configured to determine that the user Internet access delay is a difference obtained by subtracting the network local delay from the user local delay.

In the third aspect of this application, the composition modules of the wireless network delay processing system further perform the steps described in the first aspect and the possible implementations. For details, refer to the descriptions in the first aspect and the possible implementations.

According to a fourth aspect, an embodiment of this application further provides an access server. The access server includes:
a network local delay obtaining module, configured to: after access authentication on a modem is completed, obtain a network local delay via an interaction packet between the modem and the access server, where the modem is configured to convert a signal from a wireless network into a form suitable for wired network transmission, and the network local delay is a packet transmission delay between the modem and the access server;
a sending module, configured to send the network local delay to an analysis server; and
a user local delay obtaining module, configured to obtain a user local delay in a process of establishing a session between a terminal device in the wireless network and a service server in the Internet, where the user local delay is a packet transmission delay between the terminal device and the access server, where
the sending module is configured to send the user local delay to the analysis server, so that the analysis server determines a user Internet access delay based on the network local delay and the user local delay, where the user Internet access delay is a packet transmission delay between the terminal device and the modem.

Optionally, the network local delay obtaining module is configured to: send a request message to the modem, and record a first moment at which the request message is sent; receive a response message sent by the modem in response to the request message, and record a second moment at which the response message is received; and determine the network local delay based on the first moment and the second moment.

Optionally, the sending module is configured to send link maintenance information to the analysis server, where the link maintenance information includes a device address of the modem and the network local delay.

Optionally, the user local delay obtaining module is configured to: record a third moment at which a first acknowledgment packet is forwarded by the access server, where the first acknowledgment packet is an acknowledgment packet sent by the service server after the service server receives a synchronization packet sent by the terminal device; record a fourth moment at which a second acknowledgment packet is forwarded by the access server, where the second acknowledgment packet is an acknowledgment packet sent by the terminal device to the service server after the terminal device receives the first acknowledgment packet; and determine the user local delay based on the third moment and the fourth moment.

Optionally, the access server further includes a generation module.

The generation module is configured to: obtain the device address that is of the modem and that is associated with the user local delay, and generate Internet access flow information based on the obtained device address that is of the modem and that is associated with the user local delay, where the Internet access flow information includes the device address of the modem and the user local delay.

The sending module is configured to send the Internet access flow information to the analysis server.

Optionally, the sending module is configured to send an accounting message to a memory server, where the accounting message includes an Internet access address of the terminal device and the device address of the modem.

The generation module is configured to: send a traffic query request to the memory server, where the traffic query request includes an Internet access address corresponding to Internet access traffic; and receive a traffic query result sent by the memory server, where the traffic query result includes the device address that is of the modem and that corresponds to the Internet access address corresponding to the Internet access traffic.

Optionally, the access server further includes a receiving module and an obtaining module.

The receiving module is configured to receive an access authentication request sent by the modem, where the access authentication request includes an Internet access account and a password of the modem.

The obtaining module is configured to obtain an access authentication result based on the access authentication request.

The sending module is configured to send the device address of the modem to the modem when the access authentication result is that authentication on the modem succeeds.

In the fourth aspect of this application, the composition modules of the access server further perform the steps described in the second aspect and the possible implementations. For details, refer to the descriptions in the second aspect and the possible implementations.

According to a fifth aspect, a wireless network delay processing system is provided. The wireless network delay processing system includes a memory, a network interface, and at least one processor. The wireless network delay processing system has functions of implementing any one of the first aspect or the optional manners of the first aspect.

According to a sixth aspect, an access server is provided. The access server includes a memory, a network interface, and at least one processor. The access server has functions corresponding to the access server in any one of the second aspect or the optional manners of the second aspect.

According to a seventh aspect, a wireless network delay processing system is provided. The wireless network delay processing system has functions of implementing the method in any one of the first aspect or the optional manners of the first aspect. The function is implemented by hardware, or is implemented by hardware executing corresponding software. The hardware or the software includes one or more modules corresponding to the foregoing function.

According to an eighth aspect, an access server is provided. The access server has functions of implementing the method according to any one of the second aspect or the optional manners of the second aspect. The function is implemented by hardware, or is implemented by hardware executing corresponding software. The hardware or the software includes one or more modules corresponding to the foregoing function.

According to a ninth aspect, a computer-readable storage medium is provided. The storage medium stores at least one instruction, and when the instruction is run on a computer, the computer is enabled to perform the method according to any one of the first aspect or the optional manners of the first aspect or the method according to any one of the second aspect or the optional manners of the second aspect.

According to a tenth aspect, a computer program product is provided. The computer program product includes one or more computer program instructions, and when the computer program instructions are loaded and run by a computer, the computer is enabled to perform the method according to any one of the first aspect or the optional manners of the first aspect or the method according to any one of the second aspect or the optional manners of the second aspect.

According to an eleventh aspect, a chip is provided, and includes a memory and a processor. The memory is configured to store computer instructions, and the processor is configured to: invoke the computer instructions from the memory and run the computer instructions, to perform the method according to any one of the first aspect or the optional manners of the first aspect or the method according to any one of the second aspect or the optional manners of the second aspect.

It is learned from the foregoing technical solutions that, embodiments of this application have the following advantages:
In embodiments of this application, the network local delay is obtained via the interaction packet between the modem and the access server, the user local delay is obtained in the process of establishing the session between the terminal device and the service server, and the user Internet access delay is further obtained based on the network local delay and the user local delay. In embodiments of this application, a wireless network delay is detected by using an original interaction packet and a session process in a network without deploying a probe, simplifying implementation. In addition, in embodiments of this application, the user local delay and the network local delay that are used to calculate the user Internet access delay each represent a packet transmission delay between network elements in a real network environment. Therefore, in embodiments of this application, accuracy of detecting quality of a home wireless network is high.

### BRIEF DESCRIPTION OF DRAWINGS

FIG. 1a is a schematic diagram of an application scenario according to an embodiment of this application;
FIG. 1b is a schematic diagram of an application scenario according to an embodiment of this application;
FIG. 2 is a schematic diagram of a structure of a wireless network delay processing system according to an embodiment of this application;
FIG. 3 is a schematic diagram of a structure of an access server according to an embodiment of this application;
FIG. 4 is a schematic block flowchart of a wireless network delay processing method according to an embodiment of this application;
FIG. 5 is a schematic block flowchart of a wireless network delay processing method according to an embodiment of this application;
FIG. 6 is a schematic block flowchart of a wireless network delay processing method according to an embodiment of this application;
FIG. 7a is an architectural diagram of an application scenario of a wireless network delay processing system according to an embodiment of this application;
FIG. 7b is an architectural diagram of an application scenario of a wireless network delay processing system according to an embodiment of this application;
FIG. 8 is a schematic flowchart of interaction between network elements in a wireless network delay processing system according to an embodiment of this application;
FIG. 9 is a schematic diagram of a packet capture result of an accounting message according to an embodiment of this application;
FIG. 10 is a schematic diagram of a TCP-based three-way handshake process according to an embodiment of this application;
FIG. 11 is a schematic diagram of a structure of a wireless network delay processing system according to an embodiment of this application; and
FIG. 12 is a schematic diagram of a structure of an access server according to an embodiment of this application.

### DESCRIPTION OF EMBODIMENTS

To make objectives, technical solutions, and advantages of this application clearer, the following further describes implementations of this application in detail with reference to the accompanying drawings.

Currently, as home broadband is increasingly popular, a user usually accesses the Internet at home by using a terminal device such as a mobile phone or a tablet computer in a Wi-Fi access manner. Wi-Fi access may result in poor network use experience due to factors such as signal coverage and signal interference. As this type of problem cannot be detected properly, consequently carriers cannot resolve it in a targeted manner.

In some research, carriers encourage users to install an application (application, APP) for detecting wireless network quality on a mobile phone terminal, and rely on the users to actively tap the app to detect network quality. The app integrates the following functions: network speed test, signal interference test, frequently-used website connection test, and the like. After running, the app automatically collects a running result and sends the running result to a management server of the carriers. The management server analyzes related data, facilitating the carriers to learn of network usage of the users. However, a rate of installing the app by users is extremely low because most users dislike installing apps with monitoring functions on mobile phones. In addition, it is difficult to restrict users to use the app to collect network quality information only in a home Wi-Fi environment. For example, if a user uses the app on a mobile network, network quality information collected by the app is not network quality information of home broadband.

In some other research, quality of a home network is monitored using a built-in probe in an optical modem. Carriers have built-in probes in the optical modem to collect information such as a terminal delay of a home broadband user, and report the collected information to a remote management server. The management server analyzes related data, allowing the carriers to observe network usage of the users. However, as performance of the optical modem is low, an Internet access packet of the home cannot be monitored on the probe in the optical modem. In addition, actively detecting a terminal by the probe in the optical modem is restricted by a networking scheme. If the optical modem is in a bridging mode, a wireless router is further disposed between the optical modem and the terminal. In this case, the optical modem cannot bypass the wireless router to actively detect the terminal. In addition, there are many optical modem vendors, bringing difficulties in management. Most household optical modems do not have a probe capability, hardly to achieve a high popularity rate for probes.

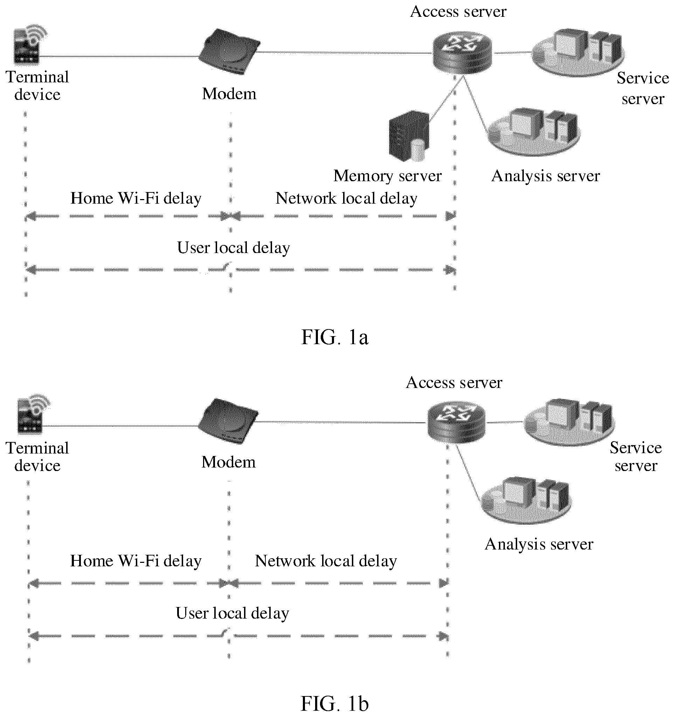

In view of this, embodiments of this application provide an application scenario. As shown in FIG. 1a, the application scenario includes a terminal device, a modem, an analysis server, an access server, a memory server, and a service server. A communication connection is established between the terminal device and the modem, a communication connection is established between the modem and the access server, and a communication connection is established between the access server and each of the analysis server, the memory server, and the service server. It should be noted that FIG. 1a is merely a schematic diagram of an application scenario for ease of understanding. In an actual application, to adapt to an actual requirement, the foregoing network devices may have different forms. For example, functions of several network devices are integrated into a same physical device, or functions of several network devices in FIG. 1a are regrouped. For example, the access server and the analysis server may be integrated into a same physical device. For another example, the analysis server and the memory server are integrated into a same physical device. For another example, the access server, the analysis server, and the memory server are integrated into a same physical device. As shown in FIG. 1b, in another application scenario, the analysis server integrates functions of the analysis server and the memory server in FIG. 1a. In another application scenario, functions of the analysis server and the memory server in FIG. 1a may be simultaneously centralized in the access server. All possible application scenarios are not listed herein.

The following first separately describes devices in the application scenario with reference to FIG. 1a. For details, refer to the following part a to f.

### a. Terminal device

The terminal device is located in a wireless network, and the terminal device establishes a session with a service server in the Internet. The terminal device is a terminal device on which service client software or browser software is installed. The service client software includes but is not limited to a game client, an online shopping client, an instant messaging application, a news push application, an online video application, an audio playing application, a social application, and the like. The terminal device includes but is not limited to a personal computer, a mobile phone, a server, a notebook computer, an Internet protocol (Internet protocol, IP) phone, a camera, a tablet computer, a wearable device, and the like. In an actual network system, optionally, there are a large quantity of terminal devices. For brevity, descriptions are provided by using only one terminal device as an example in FIG. 1a and FIG. 1b.

The terminal device establishes a session with a service server in the Internet through a modem and an access server, and a user can access the Internet by using the terminal device. For example, the terminal device can send an access request to the service server in the Internet via the modem and the access server, and the service server can send an access result to the terminal device in response to the access request of the terminal device.

### b. Modem

The modem and an access server are deployed between a terminal device and a service server. The modem is connected to the access server through an optical line terminal (optical line terminal, OLT), and the modem is connected to the terminal device through a wireless router. The modem is configured to convert a signal from a wireless network into a form suitable for wired network transmission. For example, at a transmit end, the modem modulates a digital signal generated by a computer interface into an analog signal suitable for wired network transmission; and at a receive end, the modem converts an analog signal input by a wired network into a corresponding digital signal, and sends the corresponding digital signal to the computer interface. A wired link in the wired network is another transmission medium such as a telephone line, the Ethernet, or a coaxial cable. This is not limited herein.

In some embodiments of this application, the modem is an optical modem (also referred to as an optical modem), and the optical modem is configured to convert a signal from a wireless network in which the terminal device is located into a form suitable for optical fiber line transmission. The optical modem is merely an implementation. This is not limited herein.

### c. Analysis server

The analysis server is configured to obtain a network local delay and a user local delay. The network local delay is a packet transmission delay between a modem and an access server, and the user local delay is a packet transmission delay between a terminal device and the access server. The analysis server is further configured to analyze the network local delay and the user local delay to obtain a user Internet access delay. Optionally, the analysis server is deployed in a network as an independent network element, or the analysis server and another network element are deployed in an integrated manner. For example, the analysis server and the access server can be deployed on one physical server in an integrated manner.

### d. Access server

The access server is a network device having a user access function, and is configured to provide a network access function for a user. Optionally, for example, the access server is a broadband remote access server (broadband remote access server, BRAS) or an access gateway. Descriptions are provided below by using an example in which the access server is the BRAS. It is not limited that, in this embodiment of this application, the access server obtains a network local delay and a user local delay, and sends the network local delay and the user local delay to an analysis server. Therefore, a network device having the foregoing two delay obtaining functions can be used as the access server in this embodiment of this application. This is not limited herein. For another example, in this embodiment of this application, the access server obtains the network local delay, and the access server obtains the user local delay by interacting with a memory server. An implementation of the access server is not limited.

### e. Memory server

The memory server has a data storage function. For example, the memory server stores a correspondence between an Internet access address of a terminal device and a device address of a modem. The memory server is deployed in a network as an independent network element, or the memory server and another network element in the network are deployed in an integrated manner. For example, the memory server and an access server are deployed on one physical server in an integrated manner, or the memory server and an analysis server are deployed on one physical server in an integrated manner. This is not limited herein. The memory server provides a data query result for the access server. For example, the memory server sends a traffic query result to the access server based on a traffic query request of the access server, so that the access server can identify Internet access traffic from different modems based on the traffic query result.

### f. Service server

The service server includes but is not limited to an application server or a web server. The application server includes but is not limited to a game server, a video application server, a file server, a search engine server, an instant messaging server, and the like. For example, when the service server is the application server, the service server is configured to respond to a service processing request of a service client in a terminal device, to provide a background service for the service client. The web server is referred to as a world wide web (world wide web, web) server or a web server. For example, when the service server is the web server, the service server is configured to provide, for browser software in the terminal device, a resource required for accessing a web page.

The following separately describes devices in the application scenario with reference to FIG. 1b. The application scenario shown in FIG. 1b includes a terminal device, a modem, an analysis server, an access server, and a service server. The terminal device, the modem, and the service server shown in FIG. 1b are the corresponding devices shown in FIG. 1a, and are not described herein again.

The access server in FIG. 1b is a network device having a user access function, and is configured to provide a network access function for a user. Optionally, for example, the access server is a BRAS or an access gateway. It is not limited that, in this embodiment of this application, the access server obtains a network local delay and a user local delay, and sends the network local delay and the user local delay to the analysis server. For example, the access server sends a traffic query request to the analysis server, the access server receives a traffic query result sent by the analysis server, and the access server can identify Internet access traffic from different modems based on the traffic query result.

The analysis server in FIG. 1b is configured to obtain a network local delay and a user local delay. The network local delay is a packet transmission delay between the modem and the access server, and the user local delay is a packet transmission delay between the terminal device and the access server. The analysis server is further configured to analyze the network local delay and the user local delay to obtain a user Internet access delay. Optionally, the analysis server stores a correspondence between an Internet access address of the terminal device and a device address of a modem, the access server sends a traffic query request to the analysis server, and the analysis server sends a traffic query result to the access server, so that the access server can identify Internet access traffic from different modems based on the traffic query result.

It should be noted that a difference between FIG. 1a and FIG. 1b lies in that the application scenario shown in FIG. 1b does not include a memory server, and the analysis server shown in FIG. 1b has functions of the memory server.

According to the solution provided in this embodiment of this application, the user Internet access delay can be accurately identified, to help a carrier identify a user with poor home broadband Wi-Fi quality, thereby improving user satisfaction of the carrier through active operation and maintenance, reducing user chum, and improving reputation of the carrier.

With reference to FIG. 1a and FIG. 1b, the following describes a data exchange process in an application scenario by using examples.

In this embodiment of this application, a user uses a terminal device to dial up to an optical modem to go online, and a BRAS sends an accounting packet to a memory server. The memory server parses the accounting packet, and records related information such as a user Internet protocol (Internet protocol, IP) address, a user account, and a media access control address (media access control, MAC) address of the optical modem in the accounting packet. After dial-up authentication on the terminal device succeeds, the user normally accesses the Internet to perform network experience such as games, videos, and web pages. The BRAS can analyze Internet access traffic generated by the terminal device, then query information such as the user account and the MAC address of the optical modem from the memory server based on the user IP address in the Internet access traffic, determine a user local delay, and send the user local delay to the analysis server. In addition, after the terminal device successfully dials up, the optical modem and the BRAS can establish a layer-2 link. The BRAS generates a network local delay and sends the network local delay to an analysis server. Finally, the analysis server analyzes the user local delay and the network local delay to obtain a user Internet access delay. Further, the user Internet access delay helps a carrier identify a user with poor home broadband Wi-Fi quality.

The following describes in detail a plurality of delays in embodiments of this application.

First, a network local delay is introduced. The network local delay is a packet transmission delay between a modem and an access server. The network local delay is a transmission delay of a packet in a wireless network from the modem to the access server, or the network local delay is a transmission delay of a packet in the Internet from the access server to the modem. The network local delay is also referred to as a "network delay". Optionally, the network local delay is determined by the access server. For details, refer to descriptions in the following embodiments.

Then, a user local delay is described. The user local delay is a packet transmission delay between a terminal device and an access server. The user local delay is a transmission delay of a packet from the terminal device in a wireless network to the access server, or the network local delay is a transmission delay of a packet in the Internet from the access server to the terminal device in a wireless network. The user local delay is also referred to as a "user delay". The user local delay is determined by the access server. For details, refer to descriptions in the following embodiments.

Finally, a user Internet access delay is introduced. The user Internet access delay is a packet transmission delay between a terminal device and a modem. The user Internet access delay is a transmission delay of a packet from the terminal device in a wireless network to the modem, or the user Internet access delay is a transmission delay of a packet from the modem to the terminal device in a wireless network. The user Internet access delay is also referred to as a "home Wi-Fi delay". The user Internet access delay is an important indicator for measuring home broadband network quality information. In a scenario in which a Wi-Fi signal is used in the home, the Wi-Fi signal becomes weak with factors such as a distance and wall penetration, or the signal is interfered (for example, interfered due to similar neighbor signal frequencies), resulting in a data packet loss and an increase in a user Internet access delay. In this embodiment of this application, the user Internet access delay is obtained, to identify a case in which wireless network quality deteriorates.

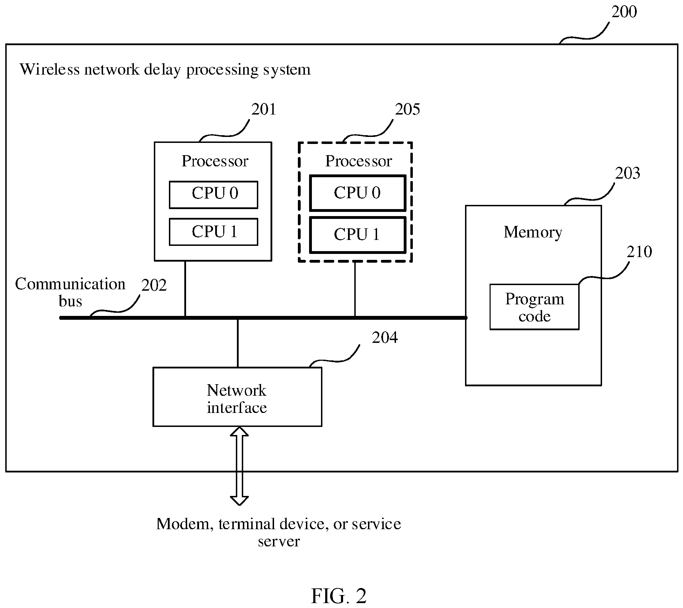

FIG. 2 is a schematic diagram of a structure of a wireless network delay processing system according to an embodiment of this application. Optionally, the wireless network delay processing system having the structure shown in FIG. 2 is the wireless network delay processing system in FIG. 1a and FIG. 1b.

FIG. 2 is a schematic diagram of a structure of a wireless network delay processing system 200 according to an example embodiment of this application. The wireless network delay processing system 200 is implemented by using a general bus architecture.

The wireless network delay processing system 200 includes at least one processor 201, a communication bus 202, a memory 203, and at least one network interface 204.

The processor 201 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 201 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), generic array logic (generic array logic, GAL), or any combination thereof.

The communication bus 202 is used to transmit information between the foregoing components. The communication bus 202 is classified into an address bus, a data bus, a control bus, and the like. For ease of representation, only one thick line is used to represent the bus in FIG. 2, but this does not mean that there is only one bus or only one type of bus.

The memory 203 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 203 exists independently, and is connected to the processor 201 through the communication bus 202. The memory 203 and the processor 201 are integrated. For example, the memory 203 may be specifically the foregoing memory server.

The network interface 204 is any apparatus such as a transceiver, and is configured to communicate with another device or a communication network. The network interface 204 includes a wired communication interface, and further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

In a specific implementation, in an embodiment, the processor 201 includes one or more CPUs, for example, a CPU 0 and a CPU 1 shown in FIG. 2.

In a specific implementation, in an embodiment, the wireless network delay processing system 200 includes a plurality of processors, for example, a processor 201 and a processor 205 shown in FIG. 2. Each of these processors is a single-core processor (single-CPU) or a multi-core processor (multi-CPU). The processor herein refers to one or more devices, circuits, and/or processing cores configured to process data (for example, computer program instructions).

In a specific implementation, in an embodiment, the wireless network delay processing system 200 further includes an output device and an input device. The output device communicates with the processor 201, and displays information in a plurality of manners. For example, the output device is a liquid crystal display (liquid crystal display, LCD), a light emitting diode (light emitting diode, LED) display device, a cathode ray tube (cathode ray tube, CRT) display device, a projector (projector), or the like. The input device communicates with the processor 201, and receives a user input in a plurality of manners. For example, the input device is a mouse, a keyboard, a touchscreen device, or a sensing device.

In some embodiments, the memory 203 is configured to store a network local delay, a user local delay, and a user Internet access delay that are subsequently obtained by the processor 201. The memory 203 is further configured to store program code 210 for executing the solutions of this application. After executing the program code 210 stored in the memory 203, the processor 201 performs the following operations: obtaining the user local delay in a process of establishing a session between a terminal device in a wireless network and a service server in the Internet, where the session is established between the terminal device and the service server by using a modem and an access server, and the user local delay is a packet transmission delay between the terminal device and the access server; and determining the user Internet access delay based on the network local delay and the user local delay, where the user Internet access delay is a packet transmission delay between the terminal device and the modem.

In some embodiments, after reading the program code 210 stored in the memory 203, the processor 201 further performs the following operations: recording a first moment at which the access server sends a request message to the modem; recording a second moment at which the modem sends a response message to the access server in response to the request message; and determining the network local delay based on the first moment and the second moment.

In some embodiments, after reading the program code 210 stored in the memory 203, the processor 201 further performs the following operation: storing, by using the memory, a correspondence between an Internet access address of the terminal device and a device address of the modem in an accounting message.

In some embodiments, after reading the program code 210 stored in the memory 203, the processor 201 further performs the following operations: recording a third moment at which a first acknowledgment packet is forwarded by the access server, where the first acknowledgment packet is an acknowledgment packet sent by the service server after the service server receives a synchronization packet sent by the terminal device; recording a fourth moment at which a second acknowledgment packet is forwarded by the access server, where the second acknowledgment packet is an acknowledgment packet sent by the terminal device to the service server after the terminal device receives the first acknowledgment packet; and determining the user local delay based on the third moment and the fourth moment.

In some embodiments, after reading the program code 210 stored in the memory 203, the processor 201 further performs the following operation: determining that the user Internet access delay is a difference obtained by subtracting the network local delay from the user local delay.

For more details about implementing the foregoing functions by the processor 201, the network interface 204, the memory 203, and the like, refer to descriptions in the following method embodiments.

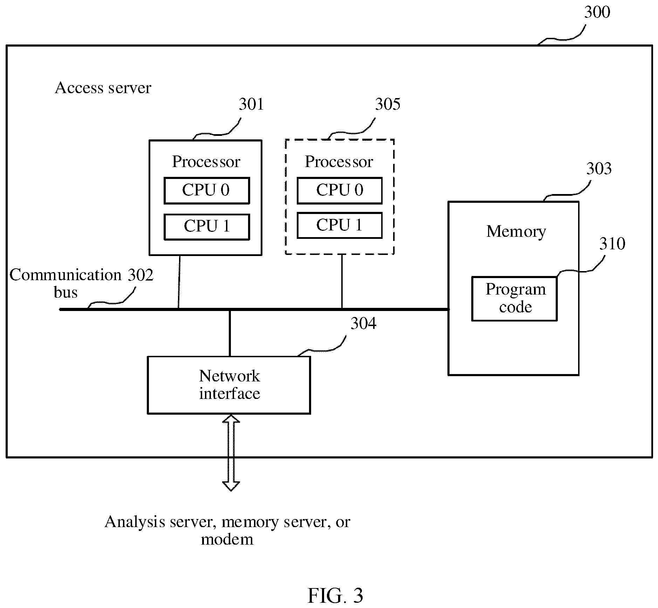

FIG. 3 is a schematic diagram of a structure of an access server according to an embodiment of this application. Optionally, a server having the structure shown in FIG. 3 is the access server in FIG. 1a and FIG. 1b.

FIG. 3 is a schematic diagram of a structure of an access server 300 according to an example embodiment of this application. The access server 300 is implemented by using a general bus architecture.

The access server 300 includes at least one processor 301, a communication bus 302, a memory 303, and at least one network interface 304.

The processor 301 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 301 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), generic array logic (generic array logic, GAL), or any combination thereof.

The communication bus 302 is used to transmit information between the foregoing components. The communication bus 302 is classified into an address bus, a data bus, a control bus, and the like. For ease of representation, only one thick line is used to represent the bus in FIG. 3, but this does not mean that there is only one bus or only one type of bus.

The memory 303 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 303 exists independently, and is connected to the processor 301 through the communication bus 302. The memory 303 and the processor 301 are integrated.

The network interface 304 is any apparatus such as a transceiver, and is configured to communicate with another device or a communication network. The network interface 304 includes a wired communication interface, and further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

In a specific implementation, in an embodiment, the processor 301 includes one or more CPUs, for example, a CPU 0 and a CPU 1 shown in FIG. 3.

In a specific implementation, in an embodiment, the access server 300 includes a plurality of processors, for example, a processor 301 and a processor 305 shown in FIG. 3. Each of these processors is a single-core processor (single-CPU) or a multi-core processor (multi-CPU). The processor herein refers to one or more devices, circuits, and/or processing cores configured to process data (for example, computer program instructions).

In a specific implementation, in an embodiment, the access server 300 further includes an output device and an input device. The output device communicates with the processor 301, and displays information in a plurality of manners. For example, the output device is a liquid crystal display (liquid crystal display, LCD), a light emitting diode (light emitting diode, LED) display device, a cathode ray tube (cathode ray tube, CRT) display device, a projector (projector), or the like. The input device communicates with the processor 301, and receives a user input in a plurality of manners. For example, the input device is a mouse, a keyboard, a touchscreen device, or a sensing device.

In some embodiments, the memory 303 is configured to store program code 310 for executing the solutions of this application. After executing the program code 310 stored in the memory 303, the processor 301 performs the following operation: after access authentication on a modem is completed, obtaining a network local delay via an interaction packet between the modem and the access server, where the modem is configured to convert a signal from a wireless network into a form suitable for wired network transmission, and the network local delay is a packet transmission delay between the modem and the access server; sending the network local delay to an analysis server through the network interface; obtaining a user local delay in a process of establishing a session between a terminal device in the wireless network and a service server in the Internet, where the user local delay is a packet transmission delay between the terminal device and the access server; and sending the user local delay to the analysis server through the network interface, so that the analysis server determines a user Internet access delay based on the network local delay and the user local delay, where the user Internet access delay is a packet transmission delay between the terminal device and the modem.

In some embodiments, after executing the program code 310 stored in the memory 303, the processor 301 is further configured to perform the following operations: sending a request message to the modem through the network interface, and recording a first moment at which the request message is sent; receiving, through the network interface, a response message sent by the modem in response to the request message, and recording a second moment at which the response message is received; and determining the network local delay based on the first moment and the second moment.

In some embodiments, after executing the program code 310 stored in the memory 303, the processor 301 is further configured to perform the following operation: sending link maintenance information to the analysis server through the network interface, where the link maintenance information includes a device address of the modem and the network local delay.

In some embodiments, after executing the program code 310 stored in the memory 303, the processor 301 is further configured to perform the following operations: recording a third moment at which a first acknowledgment packet is forwarded by the access server, where the first acknowledgment packet is an acknowledgment packet sent by the service server after the service server receives a synchronization packet sent by the terminal device; recording a fourth moment at which a second acknowledgment packet is forwarded by the access server, where the second acknowledgment packet is an acknowledgment packet sent by the terminal device to the service server after the terminal device receives the first acknowledgment packet; and determining the user local delay based on the third moment and the fourth moment.

In some embodiments, after executing the program code 310 stored in the memory 303, the processor 301 is further configured to perform the following operations: obtaining the device address that is of the modem and that is associated with the user local delay, and generating Internet access flow information based on the obtained device address that is of the modem and that is associated with the user local delay, where the Internet access flow information includes the device address of the modem and the user local delay; and sending the Internet access flow information to the analysis server through the network interface.

In some embodiments, after executing the program code 310 stored in the memory 303, the processor 301 is further configured to perform the following operations: sending an accounting message to a memory server through the network interface, where the accounting message includes an Internet access address of the terminal device and the device address of the modem; sending a traffic query request to the memory server through the network interface, where the traffic query request includes an Internet access address corresponding to Internet access traffic; and receiving, through the network interface, a traffic query result sent by the memory server, where the traffic query result includes the device address that is of the modem and that corresponds to the Internet access address corresponding to the Internet access traffic.

In some embodiments, after executing the program code 310 stored in the memory 303, the processor 301 is further configured to perform the following operations: receiving, through the network interface, an access authentication request sent by the modem, where the access authentication request includes an Internet access account and a password of the modem; obtaining an access authentication result based on the access authentication request; and sending the device address of the modem to the modem through the network interface when the access authentication result is that authentication on the modem succeeds.

For more details about implementing the foregoing functions by the processor 301, the network interface 304, the memory 303, and the like, refer to descriptions in the following method embodiments.

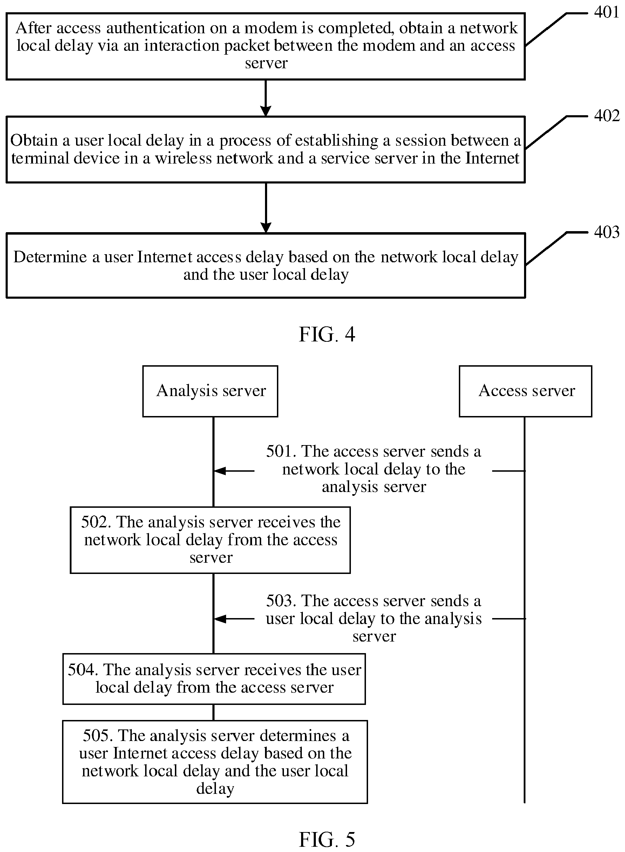

The following describes, with reference to FIG. 4, a wireless network delay processing method provided in an embodiment of this application. The method shown in FIG. 4 includes step 401 to step 403.

Optionally, a network deployment scenario of a wireless network delay processing system in the method is shown in FIG. 1a and FIG. 1b.

Optionally, hardware of the wireless network delay processing system in the method has the structure shown in FIG. 2.

As shown in FIG. 4, the following describes in detail the wireless network delay processing method provided in this embodiment of this application. The method mainly includes steps 401 to 403.

401. After access authentication on a modem is completed, obtain a network local delay via an interaction packet between the modem and an access server.

The modem is configured to convert a signal from a wireless network into a form suitable for wired network transmission, and the network local delay is a packet transmission delay between the modem and the access server.

A user performs dial-up by using the modem to go online, the modem initiates an authentication request to an authentication server, and the authentication server performs access authentication. For example, the authentication server is an authentication, authorization, and accounting (Authentication, Authorization, and Accounting, AAA) server. For example, the modem sends a remote authentication dial in user service (remote authentication dial in user service, RADIUS) authentication packet to the authentication server. After the authentication server completes authentication on the modem, the modem and the access server interact with each other. A packet generated during the interaction between the modem and the access server is referred to as an interaction packet. For example, the interaction packet has a plurality of implementations. For example, interaction is performed by using the point-to-point protocol over Ethernet (point-to-point protocol over Ethernet, PPPoE). For another example, interaction is further performed based on an Internet protocol over Ethernet (IP over Ethernet, IPoE) message or a TR-069 message. This is not limited herein.

In some embodiments of this application, step 401 is specifically performed by the access server. For example, step 401 of obtaining the network local delay by using the interaction packet between the modem and the access server includes the following steps:
A1. The access server sends a request message to the modem, and records a first moment at which the request message is sent.
A2. The access server receives a response message sent by the modem in response to the request message, and records a second moment at which the response message is received.
A3. The access server determines the network local delay based on the first moment and the second moment.

After access authentication on the modem is completed, the access server sends the request message to the modem, where the request message has a plurality of implementations, and the request message is a heartbeat packet. For example, the request message is a point-to-point protocol over Ethernet (point-to-point protocol over Ethernet, PPPoE) message, an IPoE message, or a TR-069 message. For example, the request message is a PPPoE echo request (Echo Request) message. When sending the request message, the access server records the first moment at which the request message is sent, where the first moment is referred to as a first time, and the first moment indicates a sending moment of the request message. After receiving the request message, the modem sends the response message to the access server. For example, the response message is a PPPoE echo reply (Echo Reply) message. When sending the response message, the modem records the second moment at which the response message is sent, where the second moment is referred to as a second time, and the second moment indicates a sending moment of the response message. After receiving the first moment and the second moment, the access server determines the network local delay based on the first moment and the second moment. For example, the first moment is subtracted from the second moment to obtain the network local delay. For another example, a result obtained by subtracting the first moment from the second moment is corrected to obtain the network local delay. For another example, a correction factor is determined based on quality of a link between the access server and the modem, and a result obtained by subtracting the first moment from the second moment is corrected based on the correction factor to obtain the network local delay.

402. Obtain a user local delay in a process of establishing a session between a terminal device in the wireless network and a service server in the Internet.

The session is established between the terminal device and the service server via the modem and the access server, and the user local delay is a packet transmission delay between the terminal device and the access server.

In this embodiment of this application, after access authentication on the modem is completed, the terminal device establishes the session with the service server via the modem and the access server, and obtains the user local delay in the process of establishing the session. It can be understood that the modem is located between the terminal device and the access server, and therefore the user local delay is greater than the network local delay obtained in step 401. It can be learned from FIG. 1a and FIG. 1b that, the terminal device establishes the session with the service server via the modem and the access server, and the terminal device can initiate network access to the service server by using the session. Similarly, the service server responds based on an access request of the terminal device, to implement an Internet access process of the terminal device. In a process of accessing the Internet by the terminal device, the terminal device generates Internet access traffic, and the user local delay is obtained by analyzing the Internet access traffic.

In some embodiments of this application, optionally, step 402 is performed by the access server. For example, step 402 of obtaining the user local delay in the process of establishing the session between the terminal device in the wireless network and the service server in the Internet includes steps B1 to B3.

B1. The access server records a third moment at which a first acknowledgment packet is forwarded by the access server, where the first acknowledgment packet is an acknowledgment packet sent by the service server after the service server receives a synchronization packet sent by the terminal device.

B2. The access server records a fourth moment at which a second acknowledgment packet is forwarded by the access server, where the second acknowledgment packet is an acknowledgment packet sent by the terminal device to the service server after the terminal device receives the first acknowledgment packet.

B3. The access server determines the user local delay based on the third moment and the fourth moment.

The terminal device sends a synchronization packet (syn) to the service server. After the service server receives the synchronization packet, the service server sends an acknowledgment packet (ack) to the terminal device, that is, the terminal device and the service server perform three-way handshake based on the transmission control protocol (transmission control protocol, TCP). If the access server is deployed between the terminal device and the access server, the access server needs to forward the foregoing synchronization packet and acknowledgment packet, and the access server records the third moment (also referred to as a third time) each time forwarding the synchronization packet, and records the fourth moment (also referred to as a fourth time) each time forwarding the acknowledgment packet. In this case, based on the foregoing TCP-based three-way handshake, the access server obtains the third moment and the fourth moment. For example, the third moment is subtracted from the fourth moment to obtain the user local delay. For another example, a result obtained by subtracting the third moment from the fourth moment is corrected, to obtain the user local delay. For another example, a correction factor is determined based on quality of a link between the terminal device and the service server, and a result obtained by subtracting the third time from the fourth time is corrected based on the correction factor, to obtain the user local delay.

403. Determine a user Internet access delay based on the network local delay and the user local delay, where the user Internet access delay is a packet transmission delay between the terminal device and the modem.

In this embodiment of this application, after the network local delay and the user local delay are obtained in step 401 and step 402, the user Internet access delay is determined based on the network local delay and the user local delay. It can be learned from analysis of the foregoing network local delay that the network local delay is the packet transmission delay between the modem and the access server. It can be learned from analysis of the foregoing user local delay that the user local delay is the packet transmission delay between the terminal device and the access server, and the user Internet access delay is obtained based on a location relationship between the terminal device, the modem, and the access server.

In some embodiments of this application, step 403 of determining the user Internet access delay based on the network local delay and the user local delay includes:
determining that the user Internet access delay is a difference obtained by subtracting the network local delay from the user local delay.

Step 403 is specifically performed by the wireless network delay processing system. The difference obtained by subtracting the network local delay from the user local delay is calculated. The difference is directly used as the user Internet access delay, that is, the user local delay is obtained by subtracting the network local delay from the user local delay. For another example, a result obtained by subtracting the network local delay from the user local delay is corrected to obtain the user local delay. For another example, a correction factor is determined based on quality of a link between the terminal device and the modem, and the result obtained by subtracting the network local delay from the user local delay is corrected based on the correction factor, to obtain the user Internet access delay.

It can be learned from the foregoing embodiment that, in this embodiment of this application, the network local delay is obtained via the interaction packet between the modem and the access server, the user local delay is obtained in the process of establishing the session between the terminal device and the service server, and the user Internet access delay is further obtained based on the network local delay and the user local delay. According to the solutions provided in this embodiment of this application, no probe needs to be deployed in a home wireless network, and no application for detecting wireless network quality needs to be installed on the modem or the terminal device. Therefore, deployment difficulty is low. In addition, the user local delay for evaluating quality of the home wireless network is obtained without user awareness, which improves user experience. In addition, in this embodiment of this application, the user local delay and the network local delay that are used to calculate the user Internet access delay each represent a packet transmission delay between network elements in a real network environment. Therefore, in this embodiment of this application, accuracy of detecting the quality of the home wireless network is high.

The following describes, with reference to FIG. 5, a wireless network delay processing method provided in an embodiment of this application. The method shown in FIG. 5 includes step 501 to step 505.

Optionally, network deployment scenarios of a wireless network delay processing system and an access server in the method are shown in FIG. 1a and FIG. 1b.

Optionally, an analysis server in the method shown in FIG. 5 may be specifically of the structure shown in FIG. 2, and hardware of the access server in the method shown in FIG. 5 has the structure shown in FIG. 3.

As shown in FIG. 5, another wireless network delay processing method provided in this embodiment of this application is described in detail, and mainly includes the following procedure.

501. The access server sends a network local delay to the analysis server.

For details about how the access server obtains the network local delay, refer to the example descriptions of steps A1 to A3 in the foregoing embodiment.

502. The analysis server receives the network local delay from the access server.

The network local delay is determined by the access server based on an interaction packet, and there is a communication connection between the analysis server and the access server.

Step 502 in which the analysis server receives the network local delay from the access server includes the following step:
The analysis server receives link maintenance information from the access server, where the link maintenance information includes a device address of the modem and the network local delay.

The link maintenance information is used to maintain a link between the access server and the analysis server, and the link maintenance information has a plurality of implementations, for example, the link maintenance information is specifically a PPPoE message, an IPoE message, or a TR-069 message. For example, the link maintenance information is a PPPoE flow log sent to the analysis server.

503. The access server sends a user local delay to the analysis server.

For details about how the access server obtains the user local delay, refer to the example descriptions of steps B1 to B3 in the foregoing embodiment.

504. The analysis server receives the user local delay from the access server, where the user local delay is determined by the access server based on a moment at which a handshake packet between the terminal device and the service server is forwarded by the access server, and the handshake packet is used to establish a session between the terminal device and the service server.

For a specific process in which the access server determines the user local delay based on the moment at which the handshake packet is forwarded by the access server, refer to the foregoing descriptions of B1 to B3. Details are not described herein again.

Step 504 in which the analysis server receives the user local delay from the access server includes the following step:
C1. The analysis server receives Internet access flow information from the access server.

The Internet access flow information includes an Internet access account of the modem, the device address of the modem, and the user local delay.

The access server generates the Internet access flow information, where the Internet access flow information includes the Internet access account of the modem, the device address of the modem, and the user local delay. The device address of the modem corresponds to the Internet access flow information, so that the analysis server determines a modem from which the received Internet access flow information comes. For example, the Internet access flow information is specifically an Internet access flow log generated by the access server. The Internet access flow log is a flow log formed by using an application layer of the access server, such as the hypertext transfer protocol (hypertext transfer protocol, HTTP), the file transfer protocol (file transfer protocol, FTP), or a domain name system (domain name system, DNS).

505. The analysis server determines a user Internet access delay based on the network local delay and the user local delay.

In this embodiment of this application, the analysis server determines the user Internet access delay based on the network local delay and the user local delay. It can be learned from analysis of the foregoing network local delay that the network local delay is a packet transmission delay between the modem and the access server. It can be learned from analysis of the foregoing user local delay that the user local delay is a packet transmission delay between the terminal device and the access server, and the user Internet access delay is obtained based on a location relationship between the terminal device, the modem, and the access server.

It can be learned from the example descriptions in the foregoing embodiment that in this embodiment of this application, the analysis server receives the network local delay and the user local delay from the access server, and the analysis server can accurately obtain the user Internet access delay based on the network local delay and the user local delay. In addition, in this embodiment of this application, the user local delay and the network local delay that are used to calculate the user local delay each represent a packet transmission delay between network elements in a real network environment. Therefore, in this embodiment of this application, accuracy of detecting quality of a home wireless network is high.

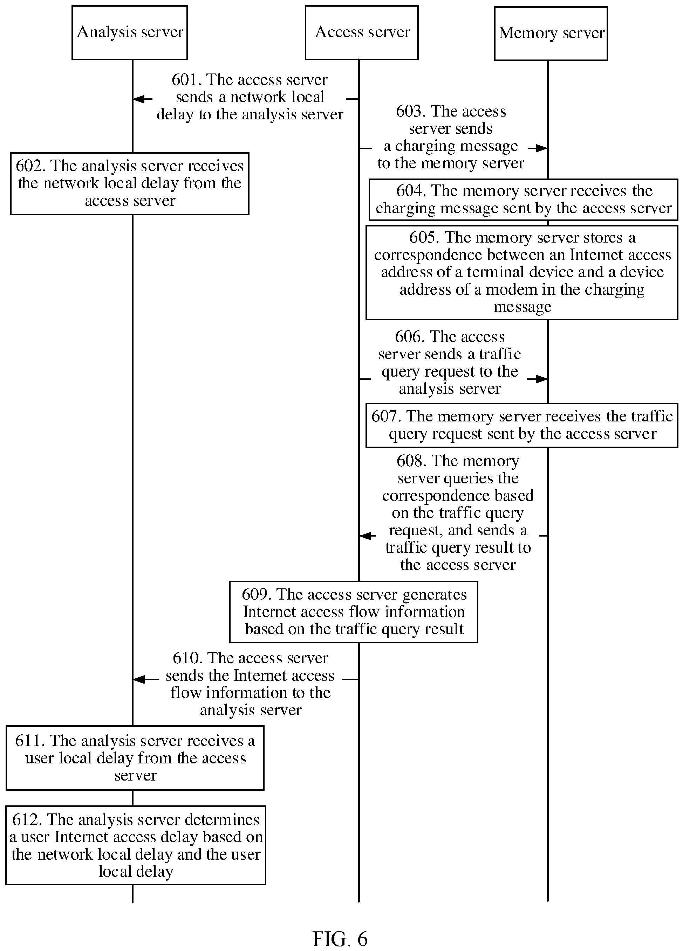

The following describes, with reference to FIG. 6, a wireless network delay processing method provided in an embodiment of this application. The method shown in FIG. 6 includes step 601 to step 612.

Optionally, a network deployment scenario of a wireless network delay processing system in the method is shown in FIG. 1a or FIG. 1b.

Optionally, hardware of an analysis server in the method has the structure shown in FIG. 2, and hardware of an access server in the method has the structure shown in FIG. 3.

As shown in FIG. 6, another wireless network delay processing method provided in this embodiment of this application is described in detail, and mainly includes the following procedure.

601. The access server sends a network local delay to the analysis server.

For details about how the access server obtains the network local delay, refer to the example descriptions of steps A1 to A3 in the foregoing embodiment.

602. The analysis server receives the network local delay from the access server, where the network local delay is determined by the access server based on an interaction packet, and there is a communication connection between the analysis server and the access server.

603. The access server sends an accounting message to a memory server.

604. The memory server receives the accounting message sent by the access server, where the accounting message includes an Internet access address of a terminal device and a device address of a modem, and there is a communication connection between the memory server and the access server.

When the access server sends an authentication request to an authentication server, the access server can receive the accounting message from the authentication server, and the access server sends the accounting message to the memory server, so that the memory server stores the accounting message.

In step 604, the accounting message sent by the access server does not include an Internet access account of the modem. Optionally, the accounting message includes the Internet access account of the modem, the Internet access address of the terminal device, and the device address of the modem, and there is the communication connection between the memory server and the access server. It can be understood that, if a user Internet access delay in a unit of family needs to be identified, the Internet access account of the modem needs to be included in the accounting message.

605. The memory server stores a correspondence between the Internet access address of the terminal device and the device address of the modem in the accounting message.

Optionally, the memory server stores a correspondence between the Internet access account of the modem, the Internet access address of the terminal device, and the device address of the modem.

In this embodiment of this application, the memory server parses the accounting message, and stores the correspondence between the Internet access account of the modem, the Internet access address of the terminal device, and the device address of the modem.

606. The access server sends a traffic query request to the analysis server.

When the terminal device sends Internet access traffic to the service server, and the Internet access traffic passes through the access server, the access server cannot determine a modem from which the Internet access traffic comes, that is, the access server cannot obtain the Internet access address of the modem corresponding to the Internet access traffic. In this case, the access server sends the traffic query request to the analysis server.

607. The memory server receives the traffic query request sent by the access server, where the traffic query request includes an Internet access address corresponding to the Internet access traffic.

608. The memory server queries the correspondence based on the traffic query request, and sends a traffic query result to the access server, where the traffic query result includes the device address that is of the modem and that corresponds to the Internet access address corresponding to the Internet access traffic.

In this embodiment of this application, the memory server stores the correspondence between the Internet access account of the modem, the Internet access address of the terminal device, and the device address of the modem. Therefore, the memory server queries the foregoing correspondence, to find the device address that is of the modem and that corresponds to the Internet access address corresponding to the Internet access traffic, and then sends the traffic query result to the access server.

In step 608, the traffic query result sent by the memory server does not include the Internet access account of the modem. Alternatively, the traffic query result includes the Internet access account of the modem, and the device address that is of the modem and that corresponds to the Internet access address corresponding to the Internet access traffic. It can be understood that, if a user Internet access delay in a unit of family needs to be identified, the Internet access account of the modem needs to be included in the traffic query result.

609. The access server generates Internet access flow information based on the traffic query result.

In this embodiment of this application, the access server receives the traffic query result, and determines, based on the traffic query result, the device address that is of the modem and that corresponds to the Internet access address corresponding to the Internet access traffic, that is, the access server accurately obtains a modem from which the Internet access traffic comes.

610. The access server sends the Internet access flow information to the analysis server, where the Internet access flow information includes the Internet access account of the modem, the device address of the modem, and the user local delay.

611. The analysis server receives the user local delay from the access server.

612. The analysis server determines a user Internet access delay based on the network local delay and the user local delay.

Step 611 and step 612 are similar to the embodiments shown in FIG. 2 and FIG. 3. Details are not described herein again.

It can be learned from the example descriptions of this application in the foregoing embodiment that, in this embodiment of this application, the memory server stores the correspondence between the Internet access address of the terminal device and the device address of the modem, so that the access server queries, from the memory server, the device address that is of the modem and that corresponds to the Internet access address corresponding to the Internet access traffic, and the access server calculates the user local delay. The analysis server receives the network local delay and the user local delay from the access server. Therefore, the analysis server can obtain the user Internet access delay based on the network local delay and the user local delay. In this embodiment of this application, a wireless network delay can be detected by using only an original interaction packet and a session process in a network without deploying a probe. In addition, the user Internet access delay obtained in this embodiment of this application is obtained based on the user local delay and the network local delay, and the user local delay and the network local delay each represent a packet transmission delay between network elements in a real network environment. Therefore, in this embodiment of this application, accuracy of detecting quality of a home wireless network is high.

For better understanding and implementation of the foregoing solutions in embodiments of this application, specific descriptions are provided below by using corresponding application scenarios as examples.

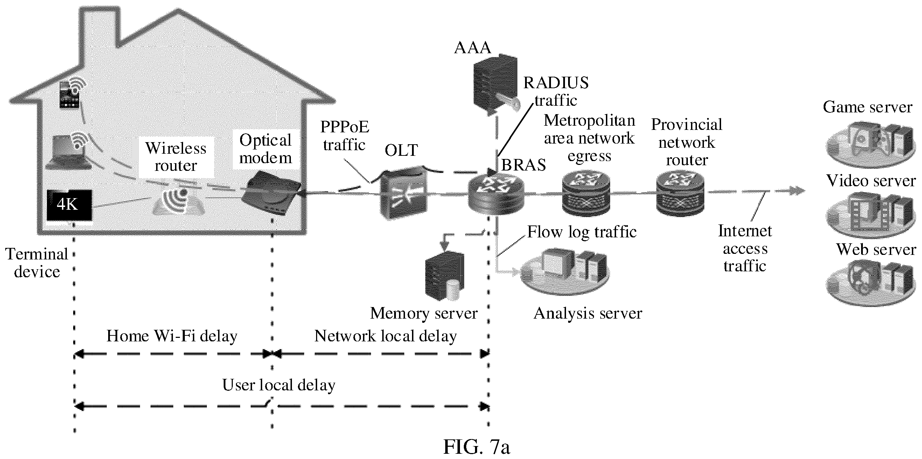

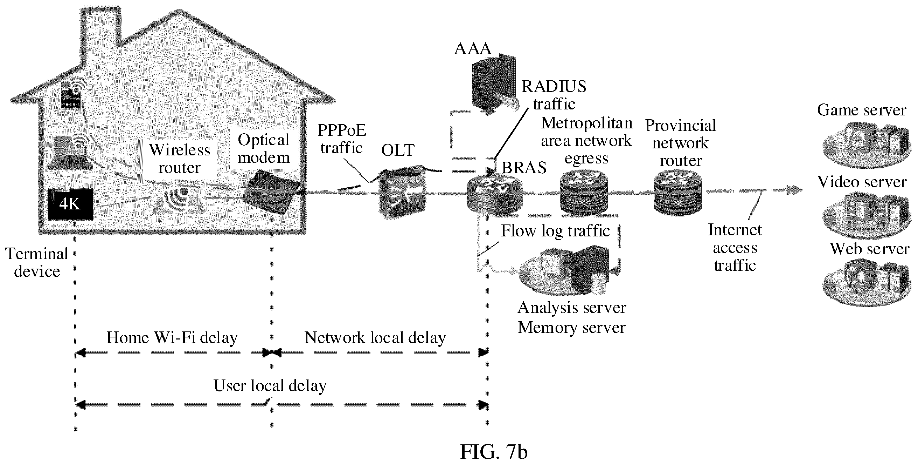

FIG. 7a and FIG. 7b show composition architectures of two different wireless network delay processing systems according to an embodiment of this application. For example, a wireless network delay processing system includes a terminal device, an optical modem, a BRAS, an analysis server, and a memory server. In FIG. 7a, the analysis server and the memory server are separately deployed independently, and both the analysis server and the memory server are connected to the BRAS. In FIG. 7b, the analysis server and the memory server are jointly deployed on one physical server. In addition, the BRAS, the analysis server, and the memory server can be jointly deployed on one physical server.

Specifically, in this embodiment of this application, the BRAS is connected to an optical modem via an OLT, the optical modem is connected to a terminal via a wireless router, the BRAS is connected to a service server via a metropolitan area network egress and a provincial network router, the BRAS is connected to an AAA server (briefly referred to as AAA in FIG. 7a and FIG. 7b), and the BRAS is connected to the analysis server and the memory server.

Embodiments of this application provide a method for identifying poor home broadband Wi-Fi quality based on PPPoE, RADIUS, and TCP. This helps carriers identify a user with poor home broadband Wi-Fi quality, thereby improving user satisfaction of the carrier through active operation and maintenance, reducing user chum, and improving carriers' reputation.

As shown in FIG. 7a and FIG. 7b, the BRAS, the memory server, and the analysis server are devices that support analysis of poor home broadband Wi-Fi quality on a network. The wireless network delay processing method provided in embodiments of this application can be implemented by using the BRAS, the memory server, and the analysis server, and program code in the BRAS, the memory server, and the analysis server may be used to implement the wireless network delay processing method provided in embodiments of this application. First, a user dials up to go online through the optical modem. The BRAS copies a RADIUS packet to the memory server. The memory server parses the RADIUS packet and records related information such as a user IP address, a user account, and a MAC address of the optical modem in the RADIUS packet, where the user IP address is the Internet access address of the terminal device, and the user account is the Internet access account of the modem. After dial-up authentication on the terminal succeeds, the user normally accesses the Internet, for example, the user performs network experience such as games, videos, and web pages. After dial-up authentication on the terminal device succeeds, the user normally accesses the Internet to perform network experience such as games, videos, and web pages. The BRAS can analyze Internet access traffic of the user, and then query information such as the user account and the MAC address of the optical modem from the memory server based on the user IP address in the Internet access traffic. The BRAS generates an Internet access flow log, and sends the Internet access flow log to the analysis server. In addition, after dial-up succeeds, the optical modem and the BRAS can establish a layer-2 link. A connection to the link is maintained by using PPPoE. The BRAS analyzes a PPPoE message, so that the BRAS generates a PPPoE flow log, and sends the PPPoE flow log to the analysis server. Finally, the analysis server analyzes an Internet access flow log of the user and the PPPoE flow log to determine the user Internet access delay. The user Internet access delay is a network delay between the terminal and the optical modem, and the user Internet access delay identifies a user with poor home broadband Wi-Fi quality.

It should be noted that the PPPoE flow log is a flow log formed by analyzing a packet at a link layer, and the Internet access flow log is a flow log formed by analyzing an application layer of the BRAS such as HTTP, FTP, or a DNS. In this embodiment of this application, the PPPoE message is mainly used to measure a delay of a link between the optical modem and the BRAS. Herein, the PPPoE message is replaced with an IPoE message or a TR-069 message.

Specifically, the technical report 069 (Technical Report 069, TR-069) is a communication protocol for communication between the optical modem and the access server. The optical modem completes necessary actions of initialization and operation management, such as service provisioning, function setting, file upload and download, and system detection by using the TR-069 protocol. TR-069 is a communication protocol that is used to remotely control a terminal device of a user and that is released by the technical standard formulation organization of DSL Forum (hereinafter renamed Broadband Forum). TR-069 is carried over the hypertext transfer protocol (hypertext transfer protocol, HTTP) and carries a unique sequence number of the optical modem. A network local delay from the optical modem to the BRAS is determined by calculating a three-way handshake delay in an HTTP link establishment process.

In addition, the IPoE message is implemented based on a front-end authentication mechanism and uses the dynamic host configuration protocol (dynamic host configuration protocol, DHCP). After authentication is completed, the authentication server sends an ARP message to the optical modem periodically (usually once every 30 seconds) by using the address resolution protocol (address resolution protocol, ARP) to detect whether a link of the optical modem still exists. The ARP message is similar to an echo request message and an echo reply message in PPPoE. The network local delay is obtained by recording, on the authentication server, a round trip time detected based on the ARP message.

Detailed descriptions are provided below by using PPPoE as an example. PPPoE is a point-to-point protocol over Ethernet, is a link layer protocol, provides a broadband access means for the user, and can further provide convenient access control and accounting in cooperation with RADIUS. Detailed descriptions are provided below by using RADIUS as an example. RADIUS is a remote access dial in user service and is an authentication, authorization, and accounting (AAA) protocol based on the user datagram protocol (user datagram protocol, UDP).

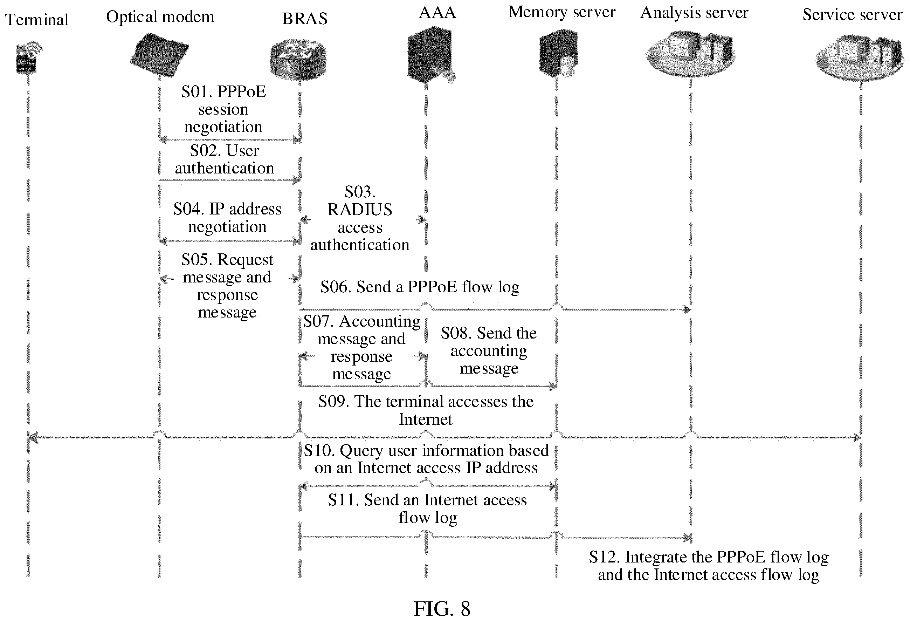

As shown in FIG. 8, a network element interaction procedure provided in an embodiment of this application mainly includes step S01 to step S12.

S01. An optical modem first finds a BRAS through PPPoE negotiation, and the optical modem negotiates a session with the BRAS.

502. The optical modem initiates user authentication. For example, the optical modem sends an authentication request to the BRAS, where the authentication request includes a user name and a password.

503. The BRAS and an AAA server (briefly referred to as AAA below) perform RADIUS access authentication. For example, the BRAS generates a RADIUS authentication packet, and sends the RADIUS authentication packet to the AAA server, to request AAA to determine whether a user can access a network. When authentication on AAA succeeds, AAA returns an authentication success message to the BRAS.

504. The BRAS notifies the optical modem that the authentication succeeds, and the optical modem and the BRAS perform IP address negotiation. For example, the BRAS may assign an Internet access IP address to the optical modem, and send the Internet access IP address to the optical modem.

S05. The BRAS sends a request message to the optical modem, the optical modem sends a response message to the BRAS, and the BRAS verifies, by using the request message, whether the optical modem is still online. For example, the BRAS periodically sends a PPPoE echo request (Echo Request) message to the optical modem. After receiving the echo request message sent by the BRAS, the optical modem returns an echo reply (Echo Reply) message to the BRAS. The echo reply message indicates that the optical modem is still online and the link needs to be maintained. This process is always continuously repeated in a user Internet access phase.

S06. The BRAS sends a PPPoE flow log to an analysis server.

For example, the BRAS records a time t1 each time sending the echo request message to the optical modem, and the BRAS records a time t2 when receiving the echo reply message replied by the optical modem. The BRAS may obtain a difference by calculating t2-t1, where the difference is used as the network local delay between the optical modem and the BRAS, periodically generates a PPPoE flow log based on a MAC address of the optical modem and the network local delay, and sends the PPPoE flow log to the analysis server. For example, content of an echo request message and an echo reply message is shown in Table 1. Table 1 shows a packet capture result table of the echo request message and the echo reply message.

| No. | Time | Source | Destination | Protocol | Length | Info |
|---|---|---|---|---|---|---|
| 13 | 13:46.3 | HuaweiTe_97:5a:13 | FiberHom_f7:3f:74 | PPP LCP | 60 | Echo Request |
| 14 | 13:46.3 | FiberHom_f7:3f:74 | HuaweiTe_97:5a:13 | PPP LCP | 60 | Echo Reply |
| 15 | 14:06.3 | HuaweiTe_97:5a:13 | FiberHom_f7:3f:74 | PPP LCP | 60 | Echo Request |
| 16 | 14:06.3 | FiberHom_f7:3f:74 | HuaweiTe_97:5a:13 | PPP LCP | 60 | Echo Reply |

In Table 1, packets with sequence numbers 13 and 14 are a pair of an echo request message and an echo reply message, and packets with sequence numbers 15 and 16 are a pair of an echo request message and an echo reply message. For example, for a pair of packets with 13 and 14, t2 = 2019-04-09 13:13:46.281, t1 = 2019-04-09 13:13:46.278, and Network local delay = t2 - t1, that is, the calculated network local delay is 3 milliseconds. Similarly, it can be learned that for a pair of packets with 15 and 16, the network local delay is 2 milliseconds.

S07. The BRAS sends an accounting message to AAA, and AAA sends a response message to the BRAS.

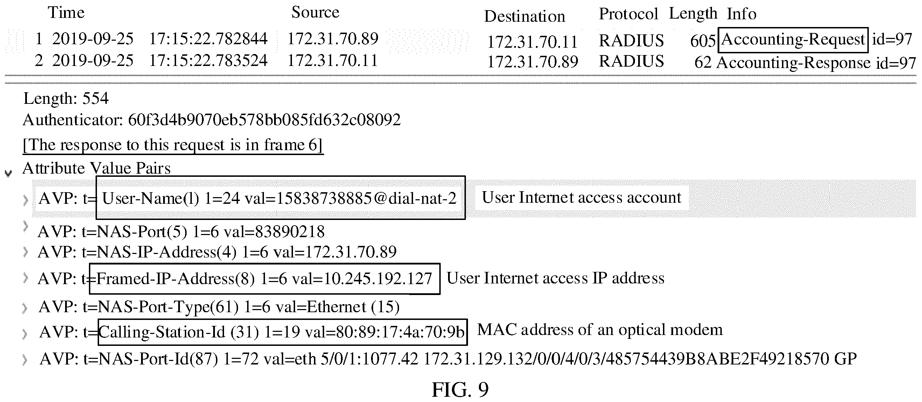

For example, the BRAS determines whether the optical modem is online, and if the optical modem is online, periodically sends the accounting message to AAA. AAA returns the response message to the BRAS. For example, FIG. 9 is a schematic diagram of a packet capture result of an AAA accounting message according to an embodiment of this application. In FIG. 9, the following packet capture result is obtained.

AVP: t-User-Name(1) l=24 val=15838738885@dial-nat-2

AVP: t=NAS-Port(5) l=6 val=83890218

AVP: t=NAS-IP-Address(8) l=6 val=172.31.70.89

AVP: t=Framed-IP-Address(8) l=6 val=10.245.192.127

AVP: t=NAS-Port-Type(61) l=6 val=Ethernet(15)

AVP: t=Calling-Station-Id(31) l=19 val=80:89:17:4a:70:9b

AVP: t=NAS-Port-Id(87) l=72 val=eth 5/0/1:1077.42 172.31.129.132/0/0/4/0/3/ 485754439B8ABE2F49218570 GP.

"t-User-Name(1) l=24 val=15838738885@dial-nat-2" is the user Internet access account, "t=Framed-IP-Address(8) l=6 val=10.245.192.127" is the user Internet access IP address, and "t=Calling-Station-Id(31) l=19 val=80:89:17:4a:70:9b" is the MAC address of the optical modem.

S08. The BRAS sends the accounting message to the memory server, and the memory server parses the accounting message, and records the following information: the user Internet access account ("t-User-Name(1) l=24 val=15838738885@dial-nat-2" in FIG. 9), the user Internet access IP address ("t=Framed-IP-Address(8) l=6 val=10.245.192.127" in FIG. 9), and the MAC address ("t=Calling-Station-Id(31) l=19 val=80:89:17:4a:70:9b" in FIG. 9) of the optical modem of the user.

S09. The terminal accesses various service servers (for example, a game server, a video server, and a web server) to experience Internet access.

S10. The BRAS analyzes Internet access traffic of the terminal of the user, and queries user information from the memory server through a user IP address of the traffic, where the user information that can be found by the BRAS from the memory server includes the user Internet access account and the MAC address of the optical modem of the user.

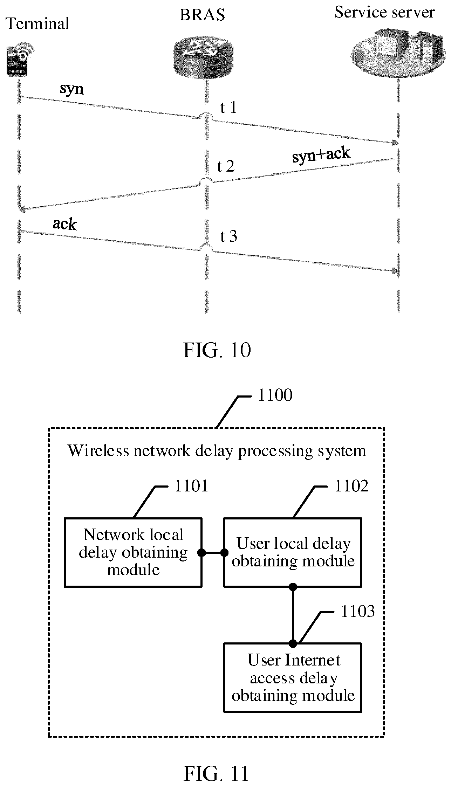

S11. The BRAS calculates a user local delay between the terminal and the BRAS through TCP-based three-way handshake. A calculation process is shown in FIG. 10. FIG. 10 is a schematic diagram of a TCP-based three-way handshake process according to an embodiment of this application.

In the TCP-based three-way handshake process shown in FIG. 10, the terminal sends a synchronization packet (syn) to the service server, and when the packet passes through the BRAS, the BRAS records a time t1. After receiving the syn packet sent by the terminal, the service server returns a response packet for the synchronization packet (syn+ack) to the terminal, and when the packet passes through the BRAS, the BRAS records a time t2. After receiving syn+ack sent by the service server, the terminal returns a response packet (ack) to the service server. Therefore, the three-way handshake is completed. When the ack packet passes through the BRAS, the BRAS records a delay t3. The BRAS obtains a difference by calculating t3-t2, where the difference obtained by calculating t3-t2 is used as a delay from the terminal to the BRAS, that is, the user local delay, and generates a user Internet access flow log based on the user local delay and the MAC address that is of the optical modem of the user and that is obtained from the memory server in step S10. The BRAS sends the Internet access flow log to the analysis server, where the Internet access flow log includes the user Internet access account, the MAC address of the optical modem, and the user local delay.

S12. The analysis server integrates the PPPoE flow log (the MAC address of the optical modem and the network local delay) and the user Internet access flow log (the user Internet access account, the MAC address of the optical modem, and the user local delay) based on the MAC address of the optical modem, and calculates the user Internet access delay (that is, a home Wi-Fi delay), where Home Wi-Fi delay = User local delay - Network local delay.

It should be noted that, in the foregoing calculation process, the network local delay between the optical modem and the BRAS is stable. It can be learned from actual long-term observation and sampling for a live network, the network local delay is usually between 2 milliseconds and 8 milliseconds, and the user local delay varies greatly due to Wi-Fi signals. Based on the actual long-term observation and sampling for the live network, the user local delay is usually approximately 20 milliseconds in the case of a good Wi-Fi condition, and the user local delay is usually up to 300 milliseconds in the case of a poor Wi-Fi condition. The user local delay becomes long due to Wi-Fi. This is because bit errors may occur when Wi-Fi signals are weak or interfered with, causing error packets. In the 802.11 wireless local area network standard, error packets are retransmitted at a MAC layer by using an acknowledgement (ACK) mechanism. Retransmission at the MAC layer causes an extra delay. Therefore, poorer quality of a home Wi-Fi network indicates a longer delay, but a packet loss rate at a network layer does not increase significantly. In this embodiment of this application, a home Wi-Fi delay is used as a key indicator, so that a user with poor quality of home broadband Wi-Fi can be accurately determined. According to the method provided in this embodiment of this application, in some tests of door-to-door visits, a valid rate can be basically up to 90%. Table 2 shows an example of an analysis output result.

| | | | | | | | | |
|---|---|---|---|---|---|---|---|---|
| accoun t | DATE_TIM E | deviceCou nt | stall_rate_perce nt | wifi_delay_ ms | rtt2_m s | effectivedownrate_kb ps | rtt2Nu m | downrttNu m |
| user00 1 | 2020/2/14 | 5 | 13 | 183 | 196 | 756 | 25 | 30 |
| user00 2 | 2020/2/14 | 6 | 5 | 65 | 70 | 1203 | 12 | 19 |
| user00 3 | 2020/2/14 | 4 | 1 | 18 | 19 | 2310 | 1 | 0 |

**Table 3 lists description about the fields in Table 2.**

| Fields | Description |
|---|---|
| account | Home broadband account |
| DATE_TIME | Analysis date |
| device Count | Quantity of terminal accounts |
| stall_rate_percent | Video stalling time ratio (%) |
| wifi_delay_ms | Wi-Fi delay (millisecond) |
| rtt2_ms | User local delay (millisecond) |
| effectivedownrate_kbps | Effective download rate (kbps) |
| rtt2Num | Quantity of times that a user local delay exceeds a threshold |
| downrttNum | Quantity of times that a data transmission delay on a user side exceeds a threshold |

It can be learned from Table 2 that a Wi-Fi delay of an account user001 is highest. In addition, a video stalling rate is highest, an effective download rate is lowest, and a quantity of times that the user local delay exceeds a threshold within one day is largest. Therefore, user001 is a typical user with lowest quality. Quality of a user with the account user002 is higher, and Wi-Fi network quality of a user with the account user003 is optimal.

It can be learned from the foregoing example descriptions that a home network is a weak point of user broadband experience. Based on NPS survey data of mobile carriers in 2018, causes and distribution of broadband dissatisfaction are displayed as follows: Approximately 90% of users are dissatisfied with home broadband in terms of a network speed and network stability. According to quarterly fault data statistics of mobile carriers, a home network problem is a main source of the fault (accounting for approximately 56%). A good home network can resolve above 50% of broadband problems. Embodiments of this application provide a precise positioning capability, improving efficiency of door-to-door visits of installation and maintenance engineers. Embodiments of this application help carriers actively resolve the home network problem, improve customer satisfaction, reduce customer chum, and improve carriers' reputation.

It should be noted that, for ease of description, the foregoing method embodiments are represented as a series of actions. However, a person skilled in the art should appreciate that this application is not limited to the described order of the actions because some steps are performed in another order or simultaneously according to this application. In addition, a person skilled in the art should appreciate that all the embodiments described in the specification are preferred embodiments, and the related actions and modules are not necessarily required by this application.

To better implement the foregoing solutions in embodiments of this application, the following further provides a related system used to implement the foregoing solutions.

Refer to FIG. 11. An embodiment of this application provides a wireless network delay processing system 1100, including:
a network local delay obtaining module 1101, configured to: after access authentication on a modem is completed, obtain a network local delay via an interaction packet between the modem and an access server, where the modem is configured to convert a signal from a wireless network into a form suitable for wired network transmission, and the network local delay is a packet transmission delay between the modem and the access server;
a user local delay obtaining module 1102, configured to obtain a user local delay in a process of establishing a session between a terminal device in the wireless network and a service server in the Internet, where the session is established between the terminal device and the service server via the modem and the access server, and the user local delay is a packet transmission delay between the terminal device and the access server; and
a user Internet access delay obtaining module 1103, configured to determine a user Internet access delay based on the network local delay and the user local delay, where the user Internet access delay is a packet transmission delay between the terminal device and the modem.

In some embodiments of this application, the wireless network delay processing system 1100 includes an analysis server and the access server. The network local delay obtaining module 1101 is implemented by a first submodule and a sending submodule in the access server in cooperation with a receiving submodule in the analysis server.

The first submodule is configured to: send a request message to the modem, and record a first moment at which the request message is sent; receive a response message sent by the modem in response to the request message, and record a second moment at which the response message is received; and determine the network local delay based on the first moment and the second moment.

The sending submodule is configured to send the network local delay to the analysis server.

The receiving submodule is configured to receive the network local delay from the access server.

Optionally, the network local delay is carried in link maintenance information sent by the sending submodule, and the link maintenance information includes a device address of the modem and the network local delay.

In some embodiments of this application, the user local delay obtaining module 1102 is implemented through collaboration among a second submodule and a sending submodule in the access server and a receiving submodule in the analysis server.

The second submodule is configured to: record a third moment at which a first acknowledgment packet is forwarded by the access server, where the first acknowledgment packet is an acknowledgment packet sent by the service server after the service server receives a synchronization packet sent by the terminal device; record a fourth moment at which a second acknowledgment packet is forwarded by the access server, where the second acknowledgment packet is an acknowledgment packet sent by the terminal device to the service server after the terminal device receives the first acknowledgment packet; and determine the user local delay based on the third moment and the fourth moment.

The sending submodule is configured to send the user local delay to the analysis server.

Optionally, the user local delay is carried in Internet access flow information sent by the sending submodule, and the Internet access flow information includes a device address of the modem and the user local delay.

The receiving submodule is configured to receive the user local delay from the access server.

Optionally, the Internet access flow information further includes an Internet access account of the modem.

In some embodiments of this application, the wireless network delay processing system 1100 further includes a memory server.

The memory server includes a receiving submodule, a storage submodule, and a sending submodule.

The receiving submodule is configured to receive an accounting message sent by the access server, where the accounting message includes an Internet access address of the terminal device and a device address of the modem, and there is a communication connection between the memory server and the access server.

The storage submodule is configured to store a correspondence between the Internet access address of the terminal device and the device address of the modem in the accounting message.

The receiving submodule is configured to receive a traffic query request sent by the access server, where the traffic query request includes an Internet access address corresponding to Internet access traffic.

The sending submodule is configured to: query the correspondence based on the traffic query request, and send a traffic query result to the access server, where the traffic query result includes the device address that is of the modem and that corresponds to the Internet access address corresponding to the Internet access traffic.

In some embodiments of this application, the user Internet access delay obtaining module 1103 is configured to determine that the user Internet access delay is a difference obtained by subtracting the network local delay from the user local delay.

In some embodiments of this application, the modem is an optical modem, and the modem is configured to convert a signal from the terminal device in the wireless network into a form suitable for optical fiber line transmission.

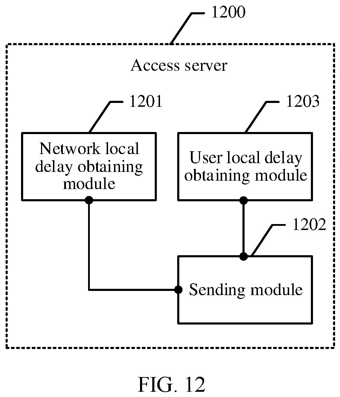

Refer to FIG. 12. An embodiment of this application provides an access server 1200, including:
a network local delay obtaining module 1201, configured to: after access authentication on a modem is completed, obtain a network local delay via an interaction packet between the modem and the access server, where the modem is configured to convert a signal from a terminal in a wireless network into a form suitable for wired network transmission, and the network local delay is a packet transmission delay between the modem and the access server;
a sending module 1202, configured to send the network local delay to an analysis server; and
a user local delay obtaining module 1203, configured to obtain a user local delay in a process of establishing a session between the terminal device in the wireless network and a service server in the Internet, where the user local delay is a packet transmission delay between the terminal device and the access server, where
the sending module 1202 is configured to send the user local delay to the analysis server, so that the analysis server determines a user Internet access delay based on the network local delay and the user local delay, where the user Internet access delay is a packet transmission delay between the terminal device and the modem.

In some embodiments of this application, the network local delay obtaining module is configured to: send a request message to the modem, and record a first moment at which the request message is sent; receive a response message sent by the modem in response to the request message, and record a second moment at which the response message is received; and determine the network local delay based on the first moment and the second moment.

In some embodiments of this application, the sending module is configured to send link maintenance information to the analysis server, where the link maintenance information includes a device address of the modem and the network local delay.

In some embodiments of this application, the user local delay obtaining module is configured to: record a third moment at which a first acknowledgment packet is forwarded by the access server, where the first acknowledgment packet is an acknowledgment packet sent by the service server after the service server receives a synchronization packet sent by the terminal device; record a fourth moment at which a second acknowledgment packet is forwarded by the access server, where the second acknowledgment packet is an acknowledgment packet sent by the terminal device to the service server after the terminal device receives the first acknowledgment packet; and determine the user local delay based on the third moment and the fourth moment.

In some embodiments of this application, the access server further includes a generation module.

The generation module is configured to: obtain the device address that is of the modem and that is associated with the user local delay, and generate Internet access flow information based on the obtained device address that is of the modem and that is associated with the user local delay, where the Internet access flow information includes the device address of the modem and the user local delay.

The sending module is configured to send the Internet access flow information to the analysis server.

In some embodiments of this application, the sending module is configured to send an accounting message to a memory server, where the accounting message includes an Internet access address of the terminal device and the device address of the modem.

The generation module is configured to: send a traffic query request to the memory server, where the traffic query request includes an Internet access address corresponding to Internet access traffic; and receive a traffic query result sent by the memory server, where the traffic query result includes the device address that is of the modem and that corresponds to the Internet access address corresponding to the Internet access traffic.

In some embodiments of this application, the access server further includes a receiving module and an obtaining module.

The receiving module is configured to receive an access authentication request sent by the modem, where the access authentication request includes an Internet access account and a password of the modem.

The obtaining module is configured to obtain an access authentication result based on the access authentication request.

The sending module is configured to send the device address of the modem to the modem when the access authentication result is that authentication on the modem succeeds.

It should be noted that content such as information exchange and an execution process between the modules/units of the foregoing system is based on the same concept as the method embodiments of this application, and brings the same technical effects as the method embodiments of this application. For specific content, refer to the descriptions in the foregoing method embodiments of this application. Details are not described herein again.

In addition, it should be noted that the described apparatus embodiment is merely an example. The units described as separate parts may or may not be physically separate, and parts displayed as units may or may not be physical units, and may be located in one position, or may be distributed on a plurality of network units. Some or all of the modules may be selected based on actual requirements to achieve the objectives of the solutions of embodiments. In addition, in the accompanying drawings of apparatus embodiments provided in this application, connection relationships between modules indicate that there are communication connections between the modules, and are specifically implemented as one or more communication buses or signal cables.

Based on the descriptions of the foregoing implementations, a person skilled in the art clearly understands that this application may be implemented by using software in addition to necessary universal hardware, and certainly by using dedicated hardware, including a dedicated integrated circuit, a dedicated CPU, a dedicated memory, a dedicated component, and the like. Generally, any function that can be performed by a computer program can be easily implemented by using corresponding hardware. In addition, a specific hardware structure used to implement a same function is various, for example, in a form of an analog circuit, a digital circuit, or a dedicated circuit. However, for this application, a software program implementation is a better implementation in most cases. Based on such an understanding, the technical solutions of this application essentially or the part contributing to the conventional technology is implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (a personal computer, a server, a network device, or the like) to perform the methods described in embodiments of this application.

It is clearly understood by a person skilled in the art that, for the purpose of convenient and brief description, for a detailed working process of the foregoing system, apparatus, and unit, refer to a corresponding process in the foregoing method embodiments. Details are not described herein again.

In this application, terms such as "first" and "second" are used to distinguish between same items or similar items that have basically same functions. It should be understood that "first" and "second" do not have a logical or time sequence dependency, and do not limit a quantity and an execution sequence.

All or some of the foregoing embodiments are implemented by using software, hardware, firmware, or any combination thereof. When software is used to implement embodiments, embodiments may be implemented completely or partially in a form of a computer program product.

The computer program product includes one or more computer instructions. When the computer program instructions are loaded and executed on a computer, the procedures or functions according to embodiments of this application are all or partially generated. The computer is a general-purpose computer, a dedicated computer, a computer network, or another programmable apparatus. The computer instructions are stored in a computer-readable storage medium or are transmitted from a computer-readable storage medium to another computer-readable storage medium. For example, the computer instructions are transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium is any usable medium that can be stored by a computer, or a data storage device, such as a server or a data center, integrating one or more usable media. The usable medium is a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A wireless network delay processing method, wherein the method comprises:
after access authentication on a modem is completed, obtaining a network local delay via an interaction packet between the modem and an access server, wherein the modem is configured to convert a signal from a wireless network into a form suitable for wired network transmission, and the network local delay is a packet transmission delay between the modem and the access server;
obtaining a user local delay in a process of establishing a session between a terminal device in the wireless network and a service server in the Internet, wherein the session is established between the terminal device and the service server via the modem and the access server, and the user local delay is a packet transmission delay between the terminal device and the access server; and
determining a user Internet access delay based on the network local delay and the user local delay, wherein the user Internet access delay is a packet transmission delay between the terminal device and the modem.

2. The method according to claim 1, wherein the obtaining a network local delay via an interaction packet between the modem and an access server comprises:
receiving, by an analysis server, the network local delay from the access server, wherein the network local delay is determined by the access server based on the interaction packet, and there is a communication connection between the analysis server and the access server.

3. The method according to claim 2, wherein the receiving, by an analysis server, the network local delay from the access server comprises:
receiving, by the analysis server, link maintenance information from the access server, wherein the link maintenance information comprises a device address of the modem and the network local delay.

4. The method according to claim 1, wherein the obtaining a network local delay via an interaction packet between the modem and an access server comprises:
sending, by the access server, a request message to the modem, and recording a first moment at which the request message is sent;
receiving, by the access server, a response message sent by the modem in response to the request message, and recording a second moment at which the response message is received; and
determining, by the access server, the network local delay based on the first moment and the second moment.

5. The method according to any one of claims 1 to 4, wherein the obtaining a user local delay in a process of establishing a session between a terminal device in the wireless network and a service server in the Internet comprises:
receiving, by the analysis server, the user local delay from the access server, wherein the user local delay is determined by the access server based on a moment at which a handshake packet between the terminal device and the service server is forwarded by the access server, and the handshake packet is used to establish the session.

6. The method according to claim 5, wherein the receiving, by the analysis server, the user local delay from the access server comprises:
receiving, by the analysis server, Internet access flow information from the access server, wherein the Internet access flow information comprises the device address of the modem and the user local delay.

7. The method according to claim 6, wherein the method further comprises:
receiving, by a memory server, an accounting message sent by the access server, wherein the accounting message comprises an Internet access address of the terminal device and the device address of the modem, and there is a communication connection between the memory server and the access server;
storing, by the memory server, a correspondence between the Internet access address of the terminal device and the device address of the modem in the accounting message;
receiving, by the memory server, a traffic query request sent by the access server, wherein the traffic query request comprises an Internet access address corresponding to Internet access traffic; and
querying, by the memory server, the correspondence based on the traffic query request, and sending a traffic query result to the access server, wherein the traffic query result comprises the device address that is of the modem and that corresponds to the Internet access address corresponding to the Internet access traffic.

8. The method according to any one of claims 1 to 4, wherein the obtaining a user local delay in a process of establishing a session between a terminal device in the wireless network and a service server in the Internet comprises:
recording, by the access server, a third moment at which a first acknowledgment packet is forwarded by the access server, wherein the first acknowledgment packet is an acknowledgment packet sent by the service server after the service server receives a synchronization packet sent by the terminal device;
recording, by the access server, a fourth moment at which a second acknowledgment packet is forwarded by the access server, wherein the second acknowledgment packet is an acknowledgment packet sent by the terminal device to the service server after the terminal device receives the first acknowledgment packet; and
determining, by the access server, the user local delay based on the third moment and the fourth moment.

9. The method according to any one of claims 1 to 8, wherein the determining a user Internet access delay based on the network local delay and the user local delay comprises:
determining that the user Internet access delay is a difference obtained by subtracting the network local delay from the user local delay.

10. The method according to any one of claims 1 to 9, wherein the modem is an optical modem, wherein the optical modem is configured to convert, into a form suitable for optical fiber line transmission, a signal from the wireless network in which the terminal device is located.

11. A wireless network delay processing method, wherein the method comprises:
after access authentication on a modem is completed, obtaining, by an access server, a network local delay via an interaction packet between the modem and the access server, wherein the modem is configured to convert a signal from a wireless network into a form suitable for wired network transmission, and the network local delay is a packet transmission delay between the modem and the access server;
sending, by the access server, the network local delay to an analysis server;
obtaining, by the access server, a user local delay in a process of establishing a session between a terminal device in the wireless network and a service server in the Internet, wherein the user local delay is a packet transmission delay between the terminal device and the access server; and
sending, by the access server, the user local delay to the analysis server, so that the analysis server determines a user Internet access delay based on the network local delay and the user local delay, wherein the user Internet access delay is a packet transmission delay between the terminal device and the modem.

12. The method according to claim 11, wherein the obtaining, by an access server, a network local delay via an interaction packet between the modem and the access server comprises:
sending, by the access server, a request message to the modem, and recording a first moment at which the request message is sent;
receiving, by the access server, a response message sent by the modem in response to the request message, and recording a second moment at which the response message is received; and
determining, by the access server, the network local delay based on the first moment and the second moment.

13. The method according to claim 11 or 12, wherein the sending, by the access server, the network local delay to an analysis server comprises:
sending, by the access server, link maintenance information to the analysis server, wherein the link maintenance information comprises a device address of the modem and the network local delay.

14. The method according to any one of claims 11 to 13, wherein the obtaining, by the access server, a user local delay in a process of establishing a session between a terminal device in the wireless network and a service server in the Internet comprises:
recording, by the access server, a third moment at which a first acknowledgment packet is forwarded by the access server, wherein the first acknowledgment packet is an acknowledgment packet sent by the service server after the service server receives a synchronization packet sent by the terminal device;
recording, by the access server, a fourth moment at which a second acknowledgment packet is forwarded by the access server, wherein the second acknowledgment packet is an acknowledgment packet sent by the terminal device to the service server after the terminal device receives the first acknowledgment packet; and
determining, by the access server, the user local delay based on the third moment and the fourth moment.

15. The method according to any one of claims 11 to 14, wherein the method further comprises:
obtaining, by the access server, the device address that is of the modem and that is associated with the user local delay, and generating Internet access flow information based on the obtained device address that is of the modem and that is associated with the user local delay, wherein the Internet access flow information comprises the device address of the modem and the user local delay; and
the sending, by the access server, the user local delay to the analysis server comprises: sending, by the access server, the Internet access flow information to the analysis server.

16. The method according to claim 15, wherein the method further comprises:
sending, by the access server, an accounting message to a memory server, wherein the accounting message comprises an Internet access address of the terminal device and the device address of the modem; and
the obtaining, by the access server, the device address that is of the modem and that is associated with the user local delay comprises:
sending, by the access server, a traffic query request to the memory server, wherein the traffic query request comprises an Internet access address corresponding to Internet access traffic; and
receiving, by the access server, a traffic query result sent by the memory server, wherein the traffic query result comprises the device address that is of the modem and that corresponds to the Internet access address corresponding to the Internet access traffic.

17. The method according to any one of claims 11 to 16, wherein the method further comprises:
receiving, by the access server, an access authentication request sent by the modem, wherein the access authentication request comprises an Internet access account and a password of the modem;
obtaining, by the access server, an access authentication result based on the access authentication request; and
sending, by the access server, the device address of the modem to the modem when the access authentication result is that authentication on the modem succeeds.

18. A wireless network delay processing system, comprising a memory, a network interface, and at least one processor, wherein the memory is configured to store program code; and
the at least one processor is configured to read the program code stored in the memory, so that the system performs the following operations:
after access authentication on a modem is completed, obtaining a network local delay via an interaction packet between the modem and an access server, wherein the modem is configured to convert a signal from a wireless network into a form suitable for wired network transmission, and the network local delay is a packet transmission delay between the modem and the access server;
obtaining a user local delay in a process of establishing a session between a terminal device in the wireless network and a service server in the Internet, wherein the session is established between the terminal device and the service server via the modem and the access server, and the user local delay is a packet transmission delay between the terminal device and the access server; and
determining a user Internet access delay based on the network local delay and the user local delay, wherein the user Internet access delay is a packet transmission delay between the terminal device and the modem.

19. The system according to claim 18, wherein after reading the program code stored in the memory, the processor performs the following operation:
determining that the user Internet access delay is a difference obtained by subtracting the network local delay from the user local delay.

20. An access server, comprising a memory, a network interface, and at least one processor, wherein the memory is configured to store program code; and
the at least one processor is configured to read the program code stored in the memory, so that the access server performs the following operations:
after access authentication on a modem is completed, obtaining a network local delay via an interaction packet between the modem and the access server, wherein the modem is configured to convert a signal from a wireless network into a form suitable for wired network transmission, and the network local delay is a packet transmission delay between the modem and the access server;
sending the network local delay to an analysis server through the network interface;
obtaining a user local delay in a process of establishing a session between a terminal device in the wireless network and a service server in the Internet, wherein the user local delay is a packet transmission delay between the terminal device and the access server; and
sending the user local delay to the analysis server through the network interface, so that the analysis server determines a user Internet access delay based on the network local delay and the user local delay, wherein the user Internet access delay is a packet transmission delay between the terminal device and the modem.

21. The access server according to claim 20, wherein the at least one processor is configured to: after reading the program code stored in the memory, perform the following operations:
sending a request message to the modem through the network interface, and recording a first moment at which the request message is sent; receiving, through the network interface, a response message sent by the modem in response to the request message, and recording a second moment at which the response message is received; and determining the network local delay based on the first moment and the second moment.

22. The access server according to claim 20 or 21, wherein the at least one processor is configured to: after reading the program code stored in the memory, perform the following operation:
sending link maintenance information to the analysis server through the network interface, wherein the link maintenance information comprises a device address of the modem and the network local delay.

23. The access server according to any one of claims 20 to 22, wherein the at least one processor is configured to: after reading the program code stored in the memory, perform the following operations:
recording a third moment at which a first acknowledgment packet is forwarded by the access server, wherein the first acknowledgment packet is an acknowledgment packet sent by the service server after the service server receives a synchronization packet sent by the terminal device; recording a fourth moment at which a second acknowledgment packet is forwarded by the access server, wherein the second acknowledgment packet is an acknowledgment packet sent by the terminal device to the service server after the terminal device receives the first acknowledgment packet; and determining the user local delay based on the third moment and the fourth moment.

24. The access server according to any one of claims 20 to 23, wherein the at least one processor is configured to: after reading the program code stored in the memory, perform the following operations:
obtaining the device address that is of the modem and that is associated with the user local delay, and generating Internet access flow information based on the obtained device address that is of the modem and that is associated with the user local delay, wherein the Internet access flow information comprises the device address of the modem and the user local delay; and sending the Internet access flow information to the analysis server through the network interface.

25. The access server according to claim 24, wherein the at least one processor is configured to: after reading the program code stored in the memory, perform the following operations: sending an accounting message to a memory server through the network interface, wherein the accounting message comprises an Internet access address of the terminal device and the device address of the modem; sending a traffic query request to the memory server through the network interface, wherein the traffic query request comprises an Internet access address corresponding to Internet access traffic; and receiving, through the network interface, a traffic query result sent by the memory server, wherein the traffic query result comprises the device address that is of the modem and that corresponds to the Internet access address corresponding to the Internet access traffic.

26. The access server according to any one of claims 20 to 25, wherein the at least one processor is configured to: after reading the program code stored in the memory, perform the following operations:
receiving, through the network interface, an access authentication request sent by the modem, wherein the access authentication request comprises an Internet access account and a password of the modem; obtaining an access authentication result based on the access authentication request; and sending the device address of the modem to the modem through the network interface when the access authentication result is that authentication on the modem succeeds.

27. A wireless network delay processing system, wherein the system comprises:
a network local delay obtaining module, configured to: after access authentication on a modem is completed, obtain a network local delay via an interaction packet between the modem and an access server, wherein the modem is configured to convert a signal from a wireless network into a form suitable for wired network transmission, and the network local delay is a packet transmission delay between the modem and the access server;
a user local delay obtaining module, configured to obtain a user local delay in a process of establishing a session between a terminal device in the wireless network and a service server in the Internet, wherein the session is established between the terminal device and the service server via the modem and the access server, and the user local delay is a packet transmission delay between the terminal device and the access server; and
a user Internet access delay obtaining module, configured to determine a user Internet access delay based on the network local delay and the user local delay, wherein the user Internet access delay is a packet transmission delay between the terminal device and the modem.

28. The system according to claim 27, wherein the system comprises an analysis server and the access server, the access server comprises a first submodule and a sending submodule, and the analysis server comprises a receiving submodule, wherein
the network local delay obtaining module is implemented through collaboration among the first submodule and the sending submodule in the access server and the receiving submodule in the analysis server;
the first submodule is configured to: send a request message to the modem, and record a first moment at which the request message is sent; receive a response message sent by the modem in response to the request message, and record a second moment at which the response message is received; and determine the network local delay based on the first moment and the second moment;
the sending submodule is configured to send the network local delay to the analysis server; and
the receiving submodule is configured to receive the network local delay from the access server.

29. The system according to claim 28, wherein the network local delay is carried in link maintenance information sent by the sending submodule, and the link maintenance information comprises a device address of the modem and the network local delay.

30. The system according to claim 27, wherein the system comprises an analysis server and the access server, the access server comprises a second submodule and a sending submodule, and the analysis server comprises a receiving submodule, wherein
the user local delay obtaining module is implemented through collaboration among the second submodule and the sending submodule in the access server and the receiving submodule in the analysis server;
the second submodule is configured to: record a third moment at which a first acknowledgment packet is forwarded by the access server, wherein the first acknowledgment packet is an acknowledgment packet sent by the service server after the service server receives a synchronization packet sent by the terminal device; record a fourth moment at which a second acknowledgment packet is forwarded by the access server, wherein the second acknowledgment packet is an acknowledgment packet sent by the terminal device to the service server after the terminal device receives the first acknowledgment packet; and determine the user local delay based on the third moment and the fourth moment; and
the sending submodule is configured to send the user local delay to the analysis server.

31. The system according to claim 30, wherein the user local delay is carried in Internet access flow information sent by the sending submodule, and the Internet access flow information comprises a device address of the modem and the user local delay; and
the receiving submodule is configured to receive the user local delay from the access server.

32. The system according to claim 27, wherein the wireless network delay processing system further comprises a memory server; and
the memory server comprises a receiving submodule, a storage submodule, and a sending submodule, wherein
the receiving submodule is configured to receive an accounting message sent by the access server, wherein the accounting message comprises an Internet access address of the terminal device and a device address of the modem, and there is a communication connection between the memory server and the access server;
the storage submodule is configured to store a correspondence between the Internet access address of the terminal device and the device address of the modem in the accounting message;
the receiving submodule is configured to receive a traffic query request sent by the access server, wherein the traffic query request comprises an Internet access address corresponding to Internet access traffic; and
the sending submodule is configured to: query the correspondence based on the traffic query request, and send a traffic query result to the access server, wherein the traffic query result comprises the device address that is of the modem and that corresponds to the Internet access address corresponding to the Internet access traffic.

33. The system according to any one of claims 27 to 32, wherein the user Internet access delay obtaining module is configured to determine that the user Internet access delay is a difference obtained by subtracting the network local delay from the user local delay.

34. An access server, wherein the access server comprises:
a network local delay obtaining module, configured to: after access authentication on a modem is completed, obtain a network local delay via an interaction packet between the modem and the access server, wherein the modem is configured to convert a signal from a wireless network into a form suitable for wired network transmission, and the network local delay is a packet transmission delay between the modem and the access server;
a sending module, configured to send the network local delay to an analysis server; and
a user local delay obtaining module, configured to obtain a user local delay in a process of establishing a session between a terminal device in the wireless network and a service server in the Internet, wherein the user local delay is a packet transmission delay between the terminal device and the access server, wherein
the sending module is further configured to send the user local delay to the analysis server, so that the analysis server determines a user Internet access delay based on the network local delay and the user local delay, wherein the user Internet access delay is a packet transmission delay between the terminal device and the modem.

35. A computer-readable storage medium, wherein the storage medium stores at least one instruction, and when the instruction is run on a computer, the computer is enabled to perform the wireless network delay processing method according to any one of claims 1 to 10 or the wireless network delay processing method according to any one of claims 11 to 17.

36. A computer program product, wherein the computer program product comprises one or more computer program instructions, and when the computer program instructions are loaded and run by a computer, the computer is enabled to perform the wireless network delay processing method according to any one of claims 1 to 10 or the wireless network delay processing method according to any one of claims 11 to 17.
